# EUROPEAN PATENT APPLICATION

(11) **EP 4 783 029 A1**
(43) Date of publication of application: **29.07.2026**
(21) Application number: 24884948.1
(22) Date of filing: 01.11.2024
(51) Int. Cl.: G06F 16/36

(54) **DATA ANALYSIS METHOD AND SYSTEM, AND RELATED DEVICE**

(30) Priority: 03.11.2023 CN 202311473247
(71) Applicant: HUAWEI TECHNOLOGIES CO., LTD., Shenzhen 518129 (CN)
(72) Inventor: YUAN, Yuan, Shenzhen, Guangdong 518129 (CN); OUYANG, Sicheng, Shenzhen, Guangdong 518129 (CN); CUI, Yongjian, Shenzhen, Guangdong 518129 (CN); DUAN, Rong, Shenzhen, Guangdong 518129 (CN)
(74) Representative: Goddar, Heinz J.
(86) International application number: PCT/CN2024/129210
(87) International publication number: WO 2025/092950

(57) **Abstract**

A data analysis method and system, and a related device are provided. In the method, a physical mapping relationship is established between metadata and table data of an underlying physical table; a semantic mapping relationship is established between a node and metadata, where semantics of a label of the node is related to semantics of the metadata; and a model mapping relationship is established between an analysis model and a node. In this way, by establishing a multi-layer mapping relationship, an analysis model can be decoupled from underlying table data, and variation of the underlying data does not affect the analysis model, thereby making the analysis model highly flexible and adaptable. In addition, because a node in a knowledge graph includes a semantic label, users can complete data query in a natural language.

## Description

This application claims priority to Chinese Patent Application No. 202311473247.0, filed with the China National Intellectual Property Administration on November 3, 2023 and entitled "DATA ANALYSIS METHOD AND SYSTEM, AND RELATED DEVICE", which is incorporated herein by reference in its entirety.

### TECHNICAL FIELD

This application relates to the computer field, and in particular, to a data analysis method and system, and a related device.

### BACKGROUND

With the advent of the information era, data in various fields is growing explosively. This explosive growth provides huge opportunities for data analysis. Data analysis has become a key technology in various industries. For example, in the healthcare field, data analysis may be performed on large-scale clinical data and bioinformatics data to assist in patient treatment, epidemiological research, drug research and development, and the like; in the financial field, data analysis may be performed on transaction data, customer behavior, and macroeconomic metrics to help financial institutions or enterprise financial departments perform risk assessment, market forecast, investment planning, and the like; and in the social media field, data analysis may be performed on user data to help social media platforms perform personalized recommendation, advertisement positioning, emotion analysis, and the like, to improve user experience. Data analysis is widely used in various fields.

When a current data analysis tool establishes an analysis model, if the analysis model needs to use table data for data analysis, a mapping relationship usually needs to be established between the table data and the analysis model, for the analysis model to automatically obtain the table data based on the mapping relationship to complete data analysis. However, if the table data changes, the analysis model needs to be accordingly adjusted, causing poor flexibility and poor adaptability of the analysis model.

### SUMMARY

This application provides a data analysis method and system, and a related device, to resolve a problem that an analysis model has poor flexibility and poor adaptability.

According to a first aspect, a data analysis system is provided. The system includes a metadata layer, a semantic layer, and a model layer. The metadata layer is configured to store a physical mapping relationship between first metadata and first table data, where the first metadata is used to describe the first table data. The semantic layer is configured to store a knowledge graph and a semantic mapping relationship between a first node in the knowledge graph and the first metadata, where the semantic mapping relationship indicates that semantics of a first label is related to the first metadata. The model layer is configured to store an analysis model and a model mapping relationship between the analysis model and the first node, where the analysis model is configured to obtain the first table data by using the model mapping relationship, the semantic mapping relationship, and the physical mapping relationship, and complete data analysis based on the first table data, to generate second table data.

According to the system described in the first aspect, a physical mapping relationship is established between metadata and table data of an underlying physical table by using the metadata, the semantic layer establishes a knowledge graph, and establishes a semantic mapping relationship between a node in the knowledge graph and metadata, and the model layer establishes a model mapping relationship between an analysis model and a node. By using such a multi-layer mapping relationship, an analysis model can be decoupled from underlying table data, and variation of the underlying data does not affect the analysis model, thereby making the analysis model highly flexible and adaptable.

In a possible implementation, the system includes an extraction unit, the semantic layer includes a graph query unit, and the metadata layer includes a table query unit. The extraction unit is configured to obtain a query text sent by a first user, where the query text is a natural language text. The graph query unit is configured to: obtain a keyword in the query text, match the keyword with labels of a plurality of nodes in the knowledge graph, to determine the first node corresponding to the keyword, and determine, based on the semantic mapping relationship, the first metadata to which the first node is mapped. The table query unit is configured to determine, based on the physical mapping relationship, the first table data corresponding to the first metadata, and send the first table data to the first user.

In the foregoing implementation, the knowledge graph including a semantic label is established, and a semantic mapping relationship between a node and metadata is completed. Therefore, when the first user queries data, the first user may complete query by using the query text in a natural language, and the data analysis system may match the keyword in the query text that is entered by the first user with a semantic label of a node, to determine the first node corresponding to the keyword, so that a data query process changes from retrieval to matching. This improves query efficiency. In addition, the first user does not need to learn knowledge related to database query, and can implement data query by entering a natural language. This improves user experience of the first user.

In a possible implementation, the metadata layer includes a mapping unit, and the mapping unit is configured to: generate second metadata based on a storage address and table structure information of the second table data, and establish a physical mapping relationship between the second metadata and the second table data.

Optionally, the metadata layer may also include a metadata configuration unit, configured to: receive a metadata configuration request sent by a second user, and update a physical mapping relationship between metadata and table data based on the metadata configuration request. The metadata configuration request may include target metadata that the second user requests to set, and a target physical mapping relationship between the target metadata and target table data. The metadata configuration unit may establish the target metadata and the target physical mapping relationship based on the metadata configuration request. Briefly, an analysis user may customize metadata for some physical tables based on a requirement of the analysis user and customize a physical mapping relationship between metadata and a physical table, or the data analysis system may automatically establish a physical mapping relationship based on the mapping unit. This is not specifically limited in this application.

It should be noted that the first user may be understood as a query user who queries data, and the second user may be understood as an analysis user who establishes an analysis model to complete data analysis. In this application, the first user is a query user, and the second user is an analysis user.

During specific implementation, the metadata may include table structure information of the table data and address information of the table data, and the table structure information may include one or more of a database name, a table name, and a field name. One piece of table data may include a plurality of fields. Therefore, one piece of table data may correspond to a plurality of pieces of metadata. The metadata may further include more information, for example, a field data type, a field length, a primary key, a foreign key, an index, a table type, and table version information. Specifically, content included in the metadata may be flexibly set based on an actual service requirement. This is not specifically limited in this application.

In the foregoing implementation, the metadata layer establishes the physical mapping relationship between the table data and the metadata, so that an analysis model can be established based on the metadata instead of the table data, thereby implementing decoupling of the analysis model from a physical table. If the table data changes, the analysis model may adapt to a new data structure, a field change, or another type of change by adjusting the metadata, and the analysis model does not need to be redesigned or modified. The metadata layer can improve flexibility and adaptability of the analysis model, and reduce maintenance costs.

In a possible implementation, the semantic layer includes a node configuration unit, configured to: obtain a node configuration request sent by a second user, create a second node based on the node configuration request, and establish a semantic mapping relationship between the second node and the second metadata, where the node configuration request includes a label of the second node and the semantic mapping relationship between the second node and the second metadata.

In the foregoing implementation, the second user may configure the label of the second node based on a requirement of the second user, and determine the second metadata that establishes the semantic mapping relationship with the second node; and the system may complete the physical mapping relationship between the second metadata and the second table data by using the mapping unit. In this way, when the first user requests to query the second table data, the first user may enter a query text, and the data analysis system may match a keyword in the query text with a label of a node in the knowledge graph, to determine the second node that matches the keyword, and then determine, based on the semantic mapping relationship, the second metadata to which the second node is mapped, to obtain the second table data corresponding to the second metadata. In the foregoing implementation, natural language query of the first user can be implemented only by simply configuring the semantic mapping relationship by the second user. In addition, in a query process, the system does not need to understand semantics of the query text entered by the first user, and can obtain the second table data through simple matching with the knowledge graph. Therefore, query efficiency is higher.

In a possible implementation, the semantic layer includes a generation unit, and the generation unit is configured to: create a second node in the knowledge graph, determine semantic information of the second metadata based on a semantic recognition model, generate a label of the second node based on the semantic information, and establish a semantic mapping relationship between the second node and the second metadata.

Optionally, the generation unit may determine an edge between nodes in the knowledge graph according to an edge design rule. During specific implementation, nodes corresponding to metadata having an association relationship may be connected through an edge, so that an association relationship between table data can also be displayed in the knowledge graph. This can improve efficiency and accuracy of association analysis.

During specific implementation, the edge design rule may include an intra-table relationship rule, an edge generated by this type of rule indicates that there is an intra-table relationship between metadata corresponding to nodes, and the intra-table relationship includes but is not limited to a primary key subordinate relationship, a general subordinate relationship, and a field value attribution relationship. The primary key subordinate relationship means that a primary key in a table corresponds to a foreign key in another table. The general subordinate relationship means that a field in a table depends on a field in another table. The field value attribution relationship means that a field in a table belongs to a field in another table. It should be understood that the foregoing intra-physical table relationship is used as an example for description. This is not specifically limited in this application.

Optionally, the edge design rule may alternatively include an inter-table relationship rule, an edge generated by this type of rule indicates that an inter-table relationship exists between metadata corresponding to nodes, and the inter-table relationship includes but is not limited to a relationship between tables, a foreign key correspondence, and an equivalence relationship between fields. The relationship between tables means a one-to-one, one-to-many, or many-to-many relationship between two tables. The foreign key correspondence means a correspondence between foreign keys of cross-table fields. The equivalence relationship between fields means that fields having a same meaning exist in different data tables. For example, a "total sales" field and a "sales amount" field have a same meaning but have different names. It should be understood that the foregoing example is used for description. This is not specifically limited in this application.

Optionally, the edge design rule may include a relationship rule between a metric/dimension and a table, an edge generated by this type of rule indicates that there is a relationship between a metric/dimension and a table between metadata corresponding to nodes, and the relationship between a metric/dimension and a table may include a relationship between a metric and a physical field, a relationship between a dimension and a physical field, a relationship between a dimension value and a dimension, a relationship between a dimension value and a field value, a relationship between a measure and a field value, a relationship between a field value and a metric, a relationship between a metric and a dimension, and the like. It should be understood that the foregoing example is used for description. This is not specifically limited in this application.

In the foregoing implementation, the data analysis system may automatically generate a label of a node based on metadata, and establish a semantic mapping relationship. In addition, the data analysis system may determine an edge between nodes in the knowledge graph based on an association relationship between table data, so that the association relationship between table data can also be displayed in the knowledge graph. This can improve efficiency and accuracy of association analysis.

In a possible implementation, the model layer includes a model configuration unit. The model configuration unit is configured to obtain a model configuration request sent by the second user, where the model configuration request includes model data of an analysis model that the second user requests to set, and a model mapping relationship between the analysis model and the first node, and the model configuration request is generated by the second user based on a label of a node in the knowledge graph. The model configuration unit is configured to create the analysis model, and establish the model mapping relationship between the analysis model and the first node.

During specific implementation, the model configuration unit may add the analysis model and the model mapping relationship to a model database based on the model configuration request. Briefly, the second user may create an analysis model based on a requirement of the second user, and define a model mapping relationship between the analysis model and a node. Specifically, the second user may determine, based on a metric, a dimension, table structure information, and an entity that need to be used by the analysis model, the node associated with the analysis model, and establish the model mapping relationship between the node and the analysis model.

Further, after the analysis model is configured, the second user may initiate a data analysis request to the data analysis system. The model configuration unit may invoke the analysis model, obtain the node in the knowledge graph based on the model mapping relationship, obtain, based on a semantic mapping relationship, metadata corresponding to the node, obtain, based on a physical mapping relationship, table data corresponding to the metadata, complete data analysis based on the table data to obtain a data analysis result, and generate table data corresponding to the data analysis result. The mapping unit in the metadata layer may generate metadata corresponding to the table data, and obtain a physical mapping relationship between the metadata and the table data. The generation unit in the semantic layer may generate a label of a node corresponding to the metadata, and obtain a semantic mapping relationship between the node and the metadata. After the knowledge graph has the node corresponding to the analysis result, when querying the analysis result, the first user may enter a natural language to query the analysis result, thereby improving query experience.

In the foregoing implementation, the second user may create an analysis model based on a data analysis requirement of the second user, and establish a model mapping relationship between a node and the analysis model based on a semantic node in the knowledge graph, so that when creating the analysis model, the second user can learn of features of an underlying physical table based on the semantic knowledge graph without learning of details of an underlying database, a table, and a field. This simplifies use of table data by the second user and improves user experience of the second user.

In a possible implementation, optionally, a label of each node may include one or more attributes, and each attribute may describe a semantic representation of the node from different dimensions. For example, the label of the node may include the following attributes: a field name, a data type, and an is-metric field. For example, a label of a node A includes a label 1: basketball player, and a label 2: programmer. The label 1 includes the following attributes: team, location, field score, and the like. The label 2 includes the following attributes: company, job level, length of service, and the like. The foregoing example is used for description. This is not specifically limited in this application.

In the foregoing implementation, a multi-attribute node label may be used to make a semantic representation of metadata richer and more accurate. When performing data query on the knowledge graph, the first user may use different attributes for node filtering, sorting, and searching, thereby making data query and retrieval more flexible and accurate.

In a possible implementation, that the semantics of the first label is related to the first metadata includes: semantics of a label of the first node is the same as table structure information in the first metadata, and the table structure information includes one or more of the following: a field, a table name, and a database name.

Optionally, that the semantics of the first label is related to the first metadata includes: the semantics of the label of the first node is a name of a metric or a dimension, and the first table data corresponding to the first metadata participates in calculation of the metric or the dimension.

Optionally, that the semantics of the first label is related to the first metadata includes: the semantics of the label of the first node is a name of an entity, the entity is an object existing in a physical world, the first metadata has an entity association relationship with the entity, and the association relationship includes one or more of a dependency relationship, a cooperation relationship, a subordinate relationship, a purchase relationship, a location relationship, and an upstream/downstream relationship.

In the foregoing implementation, nodes in the knowledge graph are designed based on three levels: a physical table information layer, a semantic metric/dimension layer, and a common information layer. The node designed based on the physical table information layer is a label generated based on metadata of a physical table, that is, the semantics of the label of the first node is the same as the table structure information in the first metadata. The node designed based on the semantic metric/dimension layer is a label generated based on semantics of a metric/dimension, and metadata that establishes a semantic mapping relationship with this type of node participates in calculation of the metric, that is, the semantics of the label of the first node is the name of the metric or the dimension. The node designed based on the public information layer is a label generated based on entity data, that is, the semantics of the label of the first node is the name of the entity. In this way, semantic labels of the nodes in the knowledge graph are designed based on a plurality of layers, so that the knowledge graph can better represent a feature of table data. This not only helps the second user flexibly establish an analysis model, but also helps the first user perform flexible semantic query.

According to a second aspect, a data analysis method is provided. The method is applied to a data analysis system, the data analysis system includes a metadata layer and a semantic layer. The metadata layer is configured to store a physical mapping relationship between first metadata and first table data, where the first metadata is used to describe the first table data. The semantic layer is configured to store a knowledge graph and a semantic mapping relationship between a first node in the knowledge graph and the first metadata, where the semantic mapping relationship indicates that semantics of a first label is related to the first metadata. The method includes the following steps: obtaining a query text sent by a first user, and determining a keyword in the query text, where the query text is a natural language text; matching the keyword with labels of a plurality of nodes in the knowledge graph based on the knowledge graph in the semantic layer, to determine the first node corresponding to the keyword, and determining, based on the semantic mapping relationship, the first metadata to which the first node is mapped; and determining, based on the physical mapping relationship in the metadata layer, the first table data to which the first metadata is mapped, and sending the first table data to the first user.

According to the method described in the second aspect, the knowledge graph including a semantic label is established, and a semantic mapping relationship between a node and metadata is completed. Therefore, when the first user queries data, the first user may complete query by using the query text in a natural language, and the data analysis system may match the keyword in the query text that is entered by the first user with a semantic label of a node, to determine the first node corresponding to the keyword, so that a data query process changes from retrieval to matching. This improves query efficiency. In addition, the first user does not need to learn knowledge related to database query, and can implement data query by entering a natural language. This improves user experience of the first user.

In a possible implementation, the data analysis system further includes a model layer, and the model layer is configured to store an analysis model and a model mapping relationship between the analysis model and the first node, where the analysis model is configured to obtain the first table data by using the model mapping relationship, the semantic mapping relationship, and the physical mapping relationship, and complete data analysis based on the first table data. The method further includes the following steps: receiving a data analysis request sent by a second user, where the data analysis request includes information about the analysis model; obtaining the analysis model; determining, based on the model mapping relationship in the model layer, the first node to which the analysis model is mapped; determining, based on the semantic mapping relationship in the semantic layer, the first metadata to which the first node is mapped; determining, based on the physical mapping relationship in the metadata layer, the first table data to which the first metadata is mapped; and inputting the first table data into the analysis model to obtain second table data, and storing the second table data.

In a possible implementation, after the second table data is stored, the method further includes the following steps: generating second metadata based on a storage address and table structure information of the second table data, and establishing a physical mapping relationship between the second metadata and the second table data in the metadata layer.

In a possible implementation, the method further includes the following steps: creating a second node in the knowledge graph in the semantic layer, determining semantic information of the second metadata based on a semantic recognition model, generating a label of the second node based on the semantic information, and establishing a semantic mapping relationship between the second node and the second metadata in the semantic layer.

In a possible implementation, the method further includes the following steps: obtaining a node configuration request sent by the second user, creating a second node in the knowledge graph in the semantic layer based on the node configuration request, and establishing a semantic mapping relationship between the second node and the second metadata in the semantic layer, where the node configuration request includes a label of the second node and the semantic mapping relationship between the second node and the second metadata.

In a possible implementation, before the data analysis request sent by the second user is received, the method further includes the following steps: obtaining a model configuration request sent by the second user, where the model configuration request includes model data of an analysis model that the second user requests to set, and a model mapping relationship between the analysis model and the first node, and the model configuration request is generated by the second user based on a label of a node in the knowledge graph; and creating the analysis model, and establishing the model mapping relationship between the analysis model and the first node.

In a possible implementation, semantics of a label of the first node is the same as table structure information in the first metadata, and the table structure information includes one or more of the following: a field, a table name, and a database name.

In a possible implementation, the semantics of the label of the first node is a name of a metric or a dimension, and the first table data corresponding to the first metadata participates in calculation of the metric or the dimension.

In a possible implementation, the semantics of the label of the first node is a name of an entity, the entity is an object existing in a physical world, the first metadata has an entity association relationship with the entity, and the association relationship includes one or more of a dependency relationship, a cooperation relationship, a subordinate relationship, a purchase relationship, a location relationship, and an upstream/downstream relationship.

According to a third aspect, a compute device is provided. The compute device includes a processor and a storage, the storage is configured to store instructions, and the processor is configured to execute the instructions, so that the compute device implements the method according to the first aspect.

According to a fourth aspect, a computer-readable storage medium is provided. The computer-readable storage medium stores instructions, and when the instructions are run by a compute device or a compute device cluster, the method according to the first aspect is implemented.

According to a fifth aspect, a compute device cluster is provided. The compute device cluster includes at least one compute device, each of the at least one compute device includes a processor and a storage, and the processor of the at least one compute device is configured to execute instructions stored in the storage of the at least one compute device, so that the compute device cluster implements the method according to the first aspect.

According to a sixth aspect, a computer program product including instructions is provided. The computer program product includes the instructions, the instructions can be run on a compute device or stored in software or a program product in any available medium, and when the computer program product runs on a compute device or a compute device cluster, the compute device or the compute device cluster is enabled to perform the method according to the first aspect.

### BRIEF DESCRIPTION OF DRAWINGS

FIG. 1 is a diagram of a data analysis system architecture according to this application;
FIG. 2 is a schematic flowchart of steps of a configuration method in a data analysis method according to this application;
FIG. 3 is a flowchart of configuration steps in an application scenario;
FIG. 4 shows an example interface in a data analysis method according to this application;
FIG. 5 shows another example interface in a data analysis method according to this application;
FIG. 6 is an example diagram of another node configuration interface according to this application;
FIG. 7 is a schematic flowchart of steps of a configuration method in a data analysis method according to this application;
FIG. 8 shows an example interface of data query according to this application; and
FIG. 9 is a diagram of a structure of a compute device according to this application.

### DESCRIPTION OF EMBODIMENTS

With the advent of the information era, data in various fields is growing explosively. This explosive growth provides huge opportunities for data analysis. Data analysis has become a key technology in various industries. For example, in the healthcare field, data analysis may be performed on large-scale clinical data and bioinformatics data to assist in patient treatment, epidemiological research, drug research and development, and the like; in the financial field, data analysis may be performed on transaction data, customer behavior, and macroeconomic metrics to help financial institutions or enterprise financial departments perform risk assessment, market forecast, investment planning, and the like; and in the social media field, data analysis may be performed on user data to help social media platforms perform personalized recommendation, advertisement positioning, emotion analysis, and the like, to improve user experience. Data analysis is widely used in various fields.

Generally, users who use a data analysis tool include an analysis user and a query user. The analysis user establishes an analysis model by using a data analysis tool and obtains an analysis result, and the query user queries the analysis result. Although data analysis is widely used in various fields, a current data analysis tool still has many disadvantages.

For the analysis user, when the analysis user establishes an analysis model by using a data analysis tool, if the analysis model needs to use table data for data analysis, a mapping relationship usually needs to be established between the table data and the analysis model, so that the analysis model can automatically obtain the table data based on the mapping relationship to complete data analysis. However, if the table data changes, the analysis model also needs to be accordingly adjusted, causing poor flexibility and poor adaptability of the analysis model.

For the query user, when querying an analysis result or other table data, the query user needs to have a specific understanding of a database, for example, understand a method of using a query statement, and memorize various table names and field names. Most query users are non-technical personnel, for example, financial personnel may not understand basic database knowledge, causing high learning costs of the query users.

In conclusion, the current data analysis tool has learning costs, and has poor user experience, poor flexibility, and poor adaptability, making it difficult to meet a service requirement of a user.

To resolve problems of poor flexibility, poor adaptability, high learning costs, and the like of a data analysis tool, this application provides a data analysis solution. In the solution, a data analysis system includes a metadata layer, a semantic layer, and a model layer. The metadata layer is configured to manage metadata, and establish a physical mapping relationship between metadata and table data of an underlying physical table. The semantic layer is configured to: manage a knowledge graph, where the knowledge graph includes a plurality of nodes and a plurality of edges; and establish a semantic mapping relationship between a node and metadata, where the semantic mapping relationship indicates that semantics of a label of the node is related to the metadata. The model layer is configured to manage an analysis model, and establish a model mapping relationship between an analysis model and a node. By using a multi-layer mapping relationship, the data analysis system can decouple an analysis model from underlying table data, and variation of the underlying data does not affect the analysis model, thereby making the analysis model highly flexible and adaptable; and an analysis user does not need to adjust the analysis model, thereby improving user experience of the analysis user. In addition, because a node in the knowledge graph includes a semantic label, a query user may complete data query in a natural language, and the data analysis system may match a keyword in a query text entered by the query user with a semantic label of a node, to determine a first node corresponding to the keyword, so that a data query process changes from retrieval to matching. This improves query efficiency. In addition, the query user does not need to learn knowledge related to database query, and can implement data query by entering a natural language. This improves user experience of the query user.

The following describes the technical solutions provided in this application with reference to the accompanying drawings.

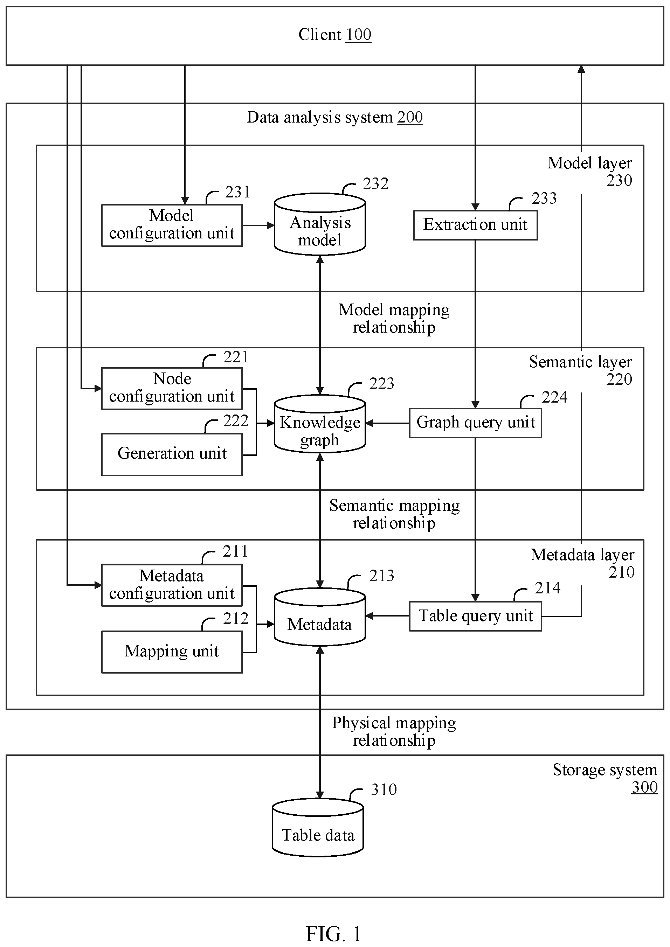

FIG. 1 is a diagram of a data analysis system architecture according to this application. As shown in FIG. 1, the structure may include a client 100, a data analysis system 200, and a storage system 300. There is a communication connection between the client 100, the data analysis system 200, and the storage system 300, and the communication connection may be a wired connection or a wireless connection. This is not specifically limited in this application. There may be one or more clients 100 that establish a communication connection to the data analysis system 200, and there may be one or more storage systems 300 that establish a communication connection to the data analysis system 200. In FIG. 1, one client 100 and one storage system 300 are used as an example for description. This is not specifically limited in this application.

The client 100 is configured to implement human-computer interaction, and may be deployed on a terminal device. The terminal device includes a personal computer, a smartphone, a wearable device, a palmtop processing device, a tablet computer, a mobile notebook computer, an augmented reality (augmented reality, AR) device, a virtual reality (virtual reality, VR) device, an integrated handheld device, a wearable, a vehicle-mounted device, a smart conference device, a smart advertising device, a smart home appliance, or the like. The smart home appliance may include a robot vacuum, a mopping robot, or the like. This is not specifically limited herein.

During specific implementation, the client 100 may be software or an application program running on a terminal device or a compute device controlled by a user, for example, a personal computer (personal computer, PC) client, or may be a world wide web (world wide web, web) client accessed based on a browser, or may be an application (application, APP) client running on a mobile terminal, or may be a console (console) of a cloud platform. This is not specifically limited in this application.

During specific implementation, the client 100 is applied to the field having data analysis and query requirements, such as data analysis, data mining, data exploration, and data query, including but not limited to the biomedical field (such as epidemiological research, and drug research and development), the financial field (such as risk assessment and market forecast), the social media field (such as personalized recommendation, advertisement positioning, and emotion analysis), the sales field (such as pricing strategy, inventory management, and customer relationship management), and the like; and may be further applied to more fields having data analysis requirements. Examples are not enumerated herein.

Optionally, the client 100 may be a client configured to implement a data analysis function. In different data analysis fields, a type of the client 100 and a user type vary. For example, in the biomedical field, the client 100 may be a bioinformatics tool, statistical analysis software, or the like, configured to process and analyze biological data such as genomics, proteomics, and gene expressions. For example, in the social media field, the client 100 may be a data mining tool, a social media analysis platform, or the like, configured to discover a public opinion trend, user interaction, and emotion analysis from social media data. For example, in the financial field, the client 100 may be a financial modeling tool, a risk analysis tool, or the like, configured to perform market analysis, investment portfolio optimization, and risk management. For example, in the sales field, the client 100 may be an inventory management tool, a pricing analysis tool, or the like, configured to optimize inventory, analyze a supply chain, and formulate a product pricing strategy. It should be understood that the foregoing example is used for description. This is not specifically limited in this application.

Optionally, the client 100 may be an independent client specially configured to implement a data analysis function, or may be a data analysis function module or plug-in in comprehensive software, for example, a data analysis or query module in data mining software, or a financial analysis assistant or a data query assistant in a common (office automation, OA) client of an enterprise. This is not specifically limited in this application.

Optionally, the client 100 may alternatively be a client of a cloud platform, for example, a console (console) of the cloud platform. Specifically, the client 100 may be a web-based console, or may be a console based on an application programming interface (application programming interface, API). This is not specifically limited in this application. The console may provide a data analysis cloud service for a management user, and the user may obtain, by purchasing the cloud service, permission to use the data analysis system 200 provided in this application.

The data analysis system 200 and the storage system 300 may be deployed on a compute device or a compute device cluster. The compute device includes a bare metal server (bare metal server, BMS), a virtual machine, a container, or an edge compute device. The BMS is a general-purpose physical server, for example, an ARM server or an x86 server. The virtual machine is a complete computer system that is simulated by using software and that has complete hardware system functions and runs in a completely isolated environment. Any work that can be completed in a physical computer can be implemented in the virtual machine. When the virtual machine is created on the compute device, some hard disks and memory capacity of a physical machine need to be used as hard disks and memory capacity of the virtual machine. Each virtual machine has an independent basic input/output system (basic input/output system, BIOS), hard disk, and operating system, and the virtual machine can be operated like the physical machine. The container is a portable software unit and can combine an application and all dependencies of the container into one software package, and the software package is not restricted by an underlying host operating system, so that a complex environment does not need to be built, and a process from application development to deployment is simplified. The edge compute device is a device that is closer to a data source and an end user and that features low latency and high bandwidth, such as an intelligent router or an edge server. The compute device cluster may include a plurality of compute devices, such as a data center. This is not specifically limited in this application. The storage system 300 may alternatively be deployed in a memory array, for example, a redundant array of independent disks (redundant array of independent disks, RAID), a network-attached storage (network-attached storage, NAS), or a storage area network (storage area network, SAN). This is not specifically limited in this application.

Optionally, the data analysis system 200 and the storage system 300 may be deployed in a same compute device, or deployed in different compute devices in a same compute device cluster, or deployed in a compute device and a memory array in a same compute device cluster, or deployed in different compute device clusters. This is not specifically limited in this application.

Optionally, the data analysis system 200 and the client 100 may be deployed in a same compute device cluster or different compute device clusters. For example, the client 100 is deployed in a terminal device in a first compute device cluster, and the data analysis system 200 is deployed in a compute device in a second compute device cluster. Alternatively, the client 100 and the data analysis system 200 are deployed in a same compute device cluster. It should be understood that the foregoing example is used for description. This is not specifically limited in this application.

The data analysis system 200 in FIG. 1 may be further divided into one or more unit modules. For example, as shown in FIG. 1, the data analysis system 200 includes a metadata layer 210, a semantic layer 220, and a model layer 230. The metadata layer 210 may include a metadata configuration unit 211, a mapping unit 212, a metadata database 213, and a table query unit 214. The semantic layer 220 may include a node configuration unit 221, a generation unit 222, a graph database 223, and a graph query unit 224. The model layer 230 may include a model configuration unit 231, an analysis model database 232, and an extraction unit 233. It should be understood that FIG. 1 is an example division manner. The client 100, the data analysis system 200, and the storage system 300 may alternatively include more or fewer units. This is not specifically limited in this application.

It should be noted that the structure shown in FIG. 1 may be an implementation in which the data analysis system 200 is deployed in a single compute device. When the data analysis system 200 is deployed in a compute device cluster including a plurality of compute devices, different compute devices in the compute device cluster may store instructions used to implement the metadata layer 210, the semantic layer 220, and the model layer 230. For example, a compute device A in the compute device cluster stores instructions used to implement the model layer 230, and a compute device B stores instructions used to implement the semantic layer 220 and the metadata layer 210. The foregoing example is used for description. This is not specifically limited in this application. Certainly, different compute devices may alternatively store a same instruction. For example, both the compute device B and a compute device C store an instruction combination of the semantic layer 220 and the metadata layer 210 to implement functions of the semantic layer 220 and the metadata layer 210. This is not specifically limited in this application.

The following describes functions of each layer in the data analysis system 200.

First, the functions of the metadata layer 210, the semantic layer 220, and the model layer 230 are described.

The metadata layer 210 is configured to manage metadata, and record a physical mapping relationship between the metadata and table data. The metadata is data that describes the table data. The table data is data in the storage system 300. The storage system 300 includes a table database 310. The table data is stored in the table database 310. The metadata and the physical mapping relationship may be stored in the metadata database 213.

Optionally, the metadata may include table structure information of the table data and address information of the table data, and the table structure information may include one or more of a database name, a table name, and a field name. One piece of table data may include a plurality of fields. Therefore, one piece of table data may correspond to a plurality of pieces of metadata.

For example, a storage address of a table X is Y, and the table X includes a plurality of fields such as "time", "region", and "sales revenue". In this case, metadata A may include the field "time" and the storage address Y, metadata B may include the field "region" and the storage address Y, and metadata C may include the field "sales revenue" and the storage address Y. It should be understood that the foregoing example is used for description. This is not specifically limited in this application.

It should be noted that, if all data of an entire table is stored at a same physical location, a storage address in metadata is a table-level storage address. If different fields in table data are stored at different physical locations, a storage address in metadata may be a field-level storage address. Generally, in a distributed storage system or slice storage case, different fields in the table data may be stored at different physical locations. Therefore, a specific form of the storage address in the metadata may be flexibly configured based on an actual service scenario. This is not specifically limited in this application.

Optionally, the metadata may further include more information, for example, a field data type, a field length, a primary key, a foreign key, an index, a table type, and table version information. Specifically, content included in the metadata may be flexibly set based on an actual service requirement. This is not specifically limited in this application.

Optionally, the metadata layer 210 may store metadata in a form of a metadata graph, and the metadata graph includes a plurality of nodes and edges. A node represents one piece of metadata, an edge between nodes represents an association relationship between metadata, and the association relationship includes an attribution relationship. For example, if a table A belongs to a database B, there is an edge between a node A and a node B. For example, if a field C belongs to a table D, there is an edge between a node C and a node D. For example, if a value E belongs to a field F, there is an edge between a node E and a node F. The foregoing example is used for description. This is not specifically limited in this application.

It should be understood that the metadata layer 210 establishes the physical mapping relationship between the table data and the metadata, so that an analysis model can be established based on the metadata instead of the table data, thereby implementing decoupling of the analysis model from a physical table. If the table data changes, the analysis model may adapt to a new data structure, a field change, or another type of change by adjusting the metadata, and the analysis model does not need to be redesigned or modified. The metadata layer 210 can improve flexibility and adaptability of the analysis model, and reduce maintenance costs.

The semantic layer 220 is configured to manage a knowledge graph (knowledge graph), and record a semantic mapping relationship between each node (node) in the knowledge graph and metadata. The knowledge graph and the semantic mapping relationship may be stored in the graph database 223.

Optionally, the knowledge graph may include a physical node and a conceptual node. The physical node is a node corresponding to an entity or an object actually existing in a physical world, for example, a company, a customer, a partner, a subsidiary, a contract, or logistics information. The conceptual node is a node corresponding to some conceptual entities (conceptual entity) in an actual service field. The conceptual entity is a node that represents an abstract concept or a category in the knowledge graph, and generally does not correspond to a specific entity in the real world but represent a general concept, category, or topic. In embodiments of this application, the conceptual node may include a node corresponding to a metric and a node corresponding to a dimension, the node corresponding to the metric may be a "net sales revenue in the same period last year" node, and the node corresponding to the dimension may be a "time" node. It should be understood that the foregoing example is used for description. This is not specifically limited in this application.

Optionally, a label of a node may be a semantic representation of metadata that establishes a semantic mapping relationship with the node, and the semantic representation may be a semantic representation of a field in the metadata, or may be a semantic representation of a table name in the metadata, or may be a semantic representation of a database name in the metadata. This is not specifically limited in this application. One node may establish a semantic mapping relationship with one or more pieces of metadata. In other words, metadata with same semantics may establish a semantic mapping relationship with a same node. The foregoing semantic representation may be specifically a natural language, such as a word, or may be a vector or a character string. This is not specifically limited in this application.

For example, the metadata A may include the field "time", which semantically represents time. In this case, the metadata A may establish a second mapping relationship with a node A1, a label of the node A1 is "time". The metadata B may include a field "trail", which semantically represents a trail. The metadata C also includes a field "trail". However, the metadata B and the metadata C correspond to different table data. In this case, the metadata B may establish a second mapping relationship with a node A2, the metadata C may also establish a second mapping relationship with the node A2, and a label of the node A2 is "trail". It should be understood that the foregoing example is used for description. This is not specifically limited in this application.

Optionally, a label of a node may alternatively be a name of a metric or a dimension, the metric or the dimension needs table data having a plurality of fields to participate in calculation, and table data corresponding to metadata associated with the node is the foregoing table data participating in calculation. For example, metadata associated with the node labeled "net sales revenue in the same period last year" may include "total sales revenue", "sales cost", "sales expense", and the like, and the metadata participates in calculation of net sales revenue in the same period. It should be understood that some calculated common metrics are placed in the knowledge graph. If a query user queries a common metric, the common metric can be directly returned. This reduces calculation costs during data query and improves query performance.

Optionally, a label of a node in the knowledge graph may alternatively be a name of an entity, for example, a subsidiary A, a subsidiary B, or a supplier C, metadata associated with the node has an entity association relationship with the entity, and the entity association relationship may include an ownership relationship, a dependency relationship, a parent-child relationship, a cooperation relationship, a subordinate relationship, a purchase relationship, an upstream/downstream relationship, a location relationship, or the like. This application imposes no limitation on the entity association relationship. For example, if a region A includes the subsidiary A and the subsidiary B, the label "region A" may establish a semantic mapping relationship with the metadata "subsidiary A" and the metadata "subsidiary B". It should be understood that an entity is split into independent nodes, so that the knowledge graph can better reflect a complex relationship between entities in the real world, thereby facilitating establishment of an analysis model.

It should be understood that the foregoing example provides a possible label of a node in the knowledge graph. During specific implementation, a label and a semantic mapping relationship may be flexibly set for a node in the knowledge graph based on a service requirement. This is not limited in this application.

Optionally, the knowledge graph may be stored based on an attribute graph. In other words, a label of each node in the knowledge graph may include one or more attributes, and each attribute may describe a semantic representation of the node from different dimensions. For example, the label of the node may include the following attributes: a field name, a data type, and an is-measure field. For example, a label of the node A includes a label 1: basketball player, and a label 2: programmer. The label 1 includes the following attributes: team, location, field score, and the like. The label 2 includes the following attributes: company, job level, length of service, and the like. The foregoing example is used for description. This is not specifically limited in this application.

It should be understood that a multi-attribute node label may make a semantic representation of metadata richer and more accurate. When performing data query on the knowledge graph, the query user may use different attributes for node filtering, sorting, and searching, thereby making data query and retrieval more flexible and accurate.

Optionally, nodes having a data association relationship are connected through an edge (edge). Each edge includes an edge type, and types of edges corresponding to different data association relationships are different. For example, for a primary key subordinate edge type, two nodes are connected through an edge of this type, and a primary key in a table corresponds to a foreign key in another table. For example, a general subordinate edge type indicates that a field in a table depends on a field in another table. For example, a foreign key correspondence edge type indicates that a foreign key in a table corresponds to a primary key in another table. The edge type is used as an example for description. Edges in the knowledge graph may include more edge types. Examples are not enumerated herein.

The edge may further include more content, for example, a direction, an attribute, and description information of the edge. The direction of the edge may include a start node and an end node. The attribute may be strength of a relationship. The description information may be some remarks of the edge. The foregoing example is used for description. This is not specifically limited in this application. It may be understood that relationships between different nodes are expressed by using edges of different types, so that a data association relationship between table data can also be displayed in the knowledge graph by using an edge between nodes. This not only facilitates data association analysis, but also facilitates path query, and improves query efficiency.

It should be noted that the semantic layer 220 may include a large knowledge graph, the large knowledge graph includes a plurality of slices (slices) or subgraphs, and different slices or subgraphs may correspond to different service scenarios or dimensions. Alternatively, the semantic layer 220 may include a plurality of small knowledge graphs, and different small knowledge graphs correspond to different service scenarios or dimensions. This is not specifically limited in this application.

It should be understood that a semantic representation of metadata is generated by the semantic layer 220 and is used as a label of a node in the knowledge graph, and then an edge between nodes is determined based on a data association relationship between metadata, so that the knowledge graph can flexibly and intuitively express semantics of the metadata and the data association relationship between metadata, and an analysis model established based on this knowledge graph has better data analysis effect. This improves efficiency and accuracy of data analysis. In addition, an underlying original physical table may be hidden by the semantic layer 220, so that when creating an analysis model, an analysis user does not need to understand details of an underlying database, table, and field, and can obtain features of the underlying physical table based on the semantic knowledge graph. This simplifies use of table data by the analysis user and improves user experience of the analysis user. Finally, the foregoing knowledge graph enables the query user to access data in a more semantic manner. The query user may query and operate data by using terms and concepts that are more compliant with service logic, for example, may directly enter "I want to view the financial report of 2102". The query user does not need to learn basic database knowledge or does not need to learn how to use various query statements, and can complete data query in a natural language. This reduces learning costs of the query user and improves user experience of the query user.

The model layer 230 is configured to manage an analysis model, and record a model mapping relationship between each analysis model and a node in the knowledge graph.

During specific implementation, the analysis model is configured to obtain table data by using the model mapping relationship, the semantic mapping relationship of the semantic layer 220, and the physical mapping relationship of the metadata layer 210, and complete data analysis based on the table data, to make some inferences or decisions. The analysis model and the model mapping relationship may be stored in the analysis model database 232.

During specific implementation, one analysis model may establish a model mapping relationship with one or more nodes. The analysis user may establish an analysis model based on a service requirement and each node in the knowledge graph. For example, the analysis model needs to obtain a net sales revenue year-on-year metric and a threshold metric. In this case, the model mapping relationship between a node and a model may be established based on a label of each node in the semantic layer 220. For example, the analysis model established with reference to the knowledge graph may include an association impact analysis model, a path query model, a subgraph query model, a node query model based on attribute query, a rule looping conflict check model, a data and rule correlation check model, or a node importance analysis model. This is not specifically limited in this application.

It should be understood that the model layer 230 establishes the model mapping relationship between an analysis model and a node, and the analysis user may create an analysis model based on a semantically described node. Compared with directly creating an analysis model by using table data, this can improve model creation efficiency of the analysis user. In addition, because the knowledge graph can flexibly and intuitively express semantics of table data and an association relationship between table data, the analysis model created in this manner can have better accuracy.

In conclusion, in the data analysis system 200 provided in this application, the metadata layer 210 establishes the physical mapping relationship between a physical table and metadata, the semantic layer 220 establishes the semantic mapping relationship between metadata and a semantic representation (label) by using the knowledge graph, and the model layer 230 establishes the model mapping relationship between a model and a semantic representation. Therefore, a created analysis model can automatically connect to a physical table by using the semantic knowledge graph, to implement data analysis and calculation. In this way, by using a multi-layer mapping relationship, an analysis model can be decoupled from underlying table data, and variation of the underlying data does not affect the analysis model, thereby making the analysis model highly flexible and adaptable. In addition, the knowledge graph in the semantic layer 220 can flexibly and intuitively express semantics of metadata and an association relationship between metadata, so that when creating an analysis model, the analysis user can complete model creation by using a semantic label, and does not need to understand details of an underlying database, table, and field. This simplifies use of table data by the analysis user and improves user experience of the analysis user. In addition, the query user can also access data in a more semantic manner, for example, may enter a natural language to complete data query. This improves user experience of the query user.

The following describes the unit modules inside each of the metadata layer 210, the semantic layer 220, and the model layer 230.

The metadata configuration unit 211 in the metadata layer 210 is configured to receive a metadata configuration request sent by the client 100, and update the metadata database 213 based on the metadata configuration request. The metadata database 213 may include metadata and a physical mapping relationship between the metadata and table data.

During specific implementation, the metadata configuration request may include target metadata that the analysis user requests to set, and a target physical mapping relationship between the target metadata and target table data. The metadata configuration unit 211 may add the target metadata and the target physical mapping relationship to the metadata database 213 based on the metadata configuration request. Briefly, the analysis user can customize metadata for some physical tables and a physical mapping relationship between metadata and a physical table based on a requirement of the analysis user.

The mapping unit 212 in the metadata layer 210 is configured to update the metadata database 213 based on the table data. It should be understood that the metadata configuration unit 211 updates the metadata and the physical mapping relationship in the metadata database 213 in a manual configuration manner, and the mapping unit 212 automatically generates the metadata of the table data and the physical mapping relationship based on the table data. Briefly, the metadata and the physical mapping relationship in the metadata database 213 may be automatically generated by the mapping unit 212 based on an underlying physical table, or may be generated after the analysis user performs manual configuration by using the metadata configuration unit 211. Different information in same metadata may alternatively be partially manually configured and generated and partially automatically generated by the system.

With reference to the foregoing content, it can be learned that the metadata includes at least table structure information of the table data and a storage address of the table data. For example, the metadata includes a field and the storage address, or the metadata includes a table name and the storage address, or the metadata includes a database name and the storage address. Therefore, the system may automatically obtain the metadata of the table data through table lookup, and then map the metadata to an original physical table.

If the metadata further includes more content, other information related to the table data structure, such as a table, a column, a data type, an index, a primary key, and a foreign key, may be automatically generated through table lookup; and information other than the table data structure, such as a service meaning, a usage, a description, and a data dictionary, may be manually set and generated.

The node configuration unit 221 in the semantic layer 220 is configured to receive a node configuration request sent by the analysis user, and update the graph database 223 based on the node configuration request.

During specific implementation, the node configuration request may include a label of a target node that the analysis user requests to set, and a target semantic mapping relationship between the target node and the target metadata. The node configuration unit 221 may add the target node to the graph database 223 based on the node configuration request, configure the label for the target node, and then associate the target node with the target metadata. Briefly, the analysis user may add a node to the knowledge graph based on a service requirement, add a semantic label, and establish a semantic mapping relationship between the node and metadata that conforms to semantics of the label.

Optionally, if a label of a manually configured node is a name of a metric or a dimension, the node configuration request accepted by the node configuration unit 221 further includes the metric name, the dimension name, and a metric formula, and the node configuration unit 221 may create a node based on the node configuration request, establish a label of the node as the metric name or the dimension name, and then establish a semantic mapping relationship between metadata and the node based on calculation logic of the metric formula.

The generation unit 222 in the semantic layer 220 is configured to update the graph database 223 based on the metadata. It should be understood that the node configuration unit 221 updates a node in the knowledge graph and a semantic mapping relationship in a manual configuration manner, and the generation unit 222 automatically generates a node and a label in the knowledge graph based on the metadata, and automatically completes the semantic mapping relationship between a node and metadata. Briefly, the node in the knowledge graph may be generated through configuration of the analysis user, or may be automatically generated by the system based on the metadata.

Optionally, if a label of a node is a semantic representation of metadata, the generation unit 222 may recognize, by using a semantic recognition model, semantic information of a field included in the metadata, generate the label of the node based on the semantic information, and establish a semantic mapping relationship between the metadata and the node. For example, a field in metadata M1 is "time", and semantic information of the field may be recognized as "time" by using the semantic recognition model. In this case, a node N1 labeled "time" may be generated, and a semantic mapping relationship is established between the node N1 and the metadata M1. For example, a field in metadata M2 is "trail", and semantic information of the field may be recognized as "trail" by using the semantic recognition model. In this case, a node N2 labeled "trail" may be generated, and a semantic mapping relationship is established between the node N2 and the metadata M2.

During specific implementation, the semantic recognition model may be a machine learning model, including but not limited to a word embedding model, a recurrent neural network (recurrent neural network, RNN), a long short-term memory (long short-term memory, LSTM) network, a convolutional neural network (convolutional neural network, CNN), a pre-training language model, and the like. The word embedding model may be Word2Vec (word to vector), GloVe (global vectors for word representation), or the like. The pre-training language model may be BERT (bidirectional encoder representations from transformers), GPT (generative pre-trained transformer), or the like. The foregoing example is used for description. This is not limited in this application.

Optionally, if a label of a node is a name of a metric or a dimension, and metadata associated with the node participates in calculation of the metric or the dimension, the generation unit 222 may further obtain metric/dimension data, where the metric/dimension data includes the metric name, the dimension name, and a metric formula; recognize semantic information of the metric name and the dimension name by using the semantic recognition model; generate the label of the node based on the semantic information; obtain, based on the metric formula, a plurality of pieces of metadata of table data participating in calculation; and establish a semantic mapping relationship between metadata and a node. During specific implementation, for some common metrics, a plurality of pieces of metric/dimension data may be obtained by connecting to a metric platform, connecting to a dimension platform, or importing a white paper.

Optionally, if a label of a node is a name of an entity, the generation unit 222 may further obtain entity data, recognize semantic information of the entity name by using the semantic recognition model, generate the label of the node based on the semantic information, determine, based on the entity data, metadata associated with the entity, and establish a semantic mapping relationship between metadata and a node. During specific implementation, a plurality of pieces of entity data may be obtained by connecting to a management platform of an enterprise, importing management data, or the like.

Briefly, for a conceptual node, when semantics of a label of the node is the same as associated metadata, the generation unit 222 may obtain the label of the node by recognizing semantic information of a field in the metadata. When the semantics of the label of the node is related to the associated metadata, the generation unit 222 may obtain metric/dimension data, obtain the label based on a metric name in the metric/dimension data, and determine a semantic mapping relationship based on a metric formula in the metric/dimension data. For a physical node, if a label of the node is a name of an entity, entity data may be obtained, the label is obtained based on the entity name in the entity data, and then metadata associated with the node is determined based on entity association relationships between various entities recorded in the entity data.

It should be noted that a label of a node may include one or more attributes, and these attributes may be set based on the analysis user, or may be obtained by the generation unit 222 based on original table data, entity data, or metric/dimension data. For example, the label of the node may include attributes such as a field name, a data type, and an is-measure field. These attributes are table structure information, and may be obtained by querying the original table data. For another example, the label of the node may include attributes such as an atomic metric, a scenario, a scenario value, and a time period. The atomic metric is a measure for service event behavior, and is named by using an action and a measurement manner, for example, a payment amount or a quantity of registered analysis users. These attributes may be obtained based on the metric/dimension data. It should be understood that the foregoing example is used for description. This is not specifically limited in this application.

It should be understood that some calculated common metrics are placed in the knowledge graph as nodes. If the analysis user queries a common metric, the common metric can be directly returned. This reduces calculation costs during data query and improves query performance. A semantic representation of an entity is placed in the knowledge graph as a node, so that the knowledge graph can better reflect a complex relationship between entities in the real world, thereby facilitating establishment of an analysis model. A semantic representation of metadata is placed in the knowledge graph as a node, which not only helps the analysis user establish an analysis model, but also helps the analysis user query data in a natural language manner, thereby improving user experience of the analysis user.

Optionally, the generation unit 222 may determine an edge between nodes in the knowledge graph according to an edge design rule. During specific implementation, nodes corresponding to metadata having an association relationship may be connected through an edge, so that an association relationship between table data can also be displayed in the knowledge graph. This can improve efficiency and accuracy of association analysis.

Optionally, the edge design rule may include an intra-table relationship rule, an edge generated by this type of rule indicates that there is an intra-table relationship between metadata corresponding to nodes, and the intra-table relationship includes but is not limited to a primary key subordinate relationship, a general subordinate relationship, and a field value attribution relationship. The primary key subordinate relationship means that a primary key in a table corresponds to a foreign key in another table. The general subordinate relationship means that a field in a table depends on a field in another table. The field value attribution relationship means that a field in a table is attributed to a field in another table. It should be understood that the foregoing intra-physical table relationship is used as an example for description. This is not specifically limited in this application.

Optionally, the edge design rule may include an inter-table relationship rule, an edge generated by this type of rule indicates that there is an inter-table relationship between metadata corresponding to nodes, and the inter-table relationship includes but is not limited to a relationship between tables, a foreign key correspondence, and an equivalence relationship between fields. The relationship between tables means a one-to-one, one-to-many, or many-to-many relationship between two tables. The foreign key correspondence means a correspondence between foreign keys of cross-table fields. The equivalence relationship between fields means that fields having a same meaning exist in different data tables. For example, a "total sales" field and a "sales amount" field have a same meaning but have different names. It should be understood that the foregoing example is used for description. This is not specifically limited in this application.

Optionally, the edge design rule may include a relationship rule between a metric/dimension and a table, an edge generated by this type of rule indicates that there is a relationship between a metric/dimension and a table between metadata corresponding to nodes, and the relationship between a metric/dimension and a table may include a relationship between a metric and a physical field, a relationship between a dimension and a physical field, a relationship between a dimension value and a dimension, a relationship between a dimension value and a field value, a relationship between a measure and a field value, a relationship between a field value and a metric, a relationship between a metric and a dimension, and the like. It should be understood that the foregoing example is used for description. This is not specifically limited in this application. For example, a metric is a total sales amount, a physical field includes a sales quantity and a sales unit price, the total sales amount is a product of the sales quantity and the sales unit price, there is a relationship between the metric and the physical field, that is, between the total sales amount and the sales quantity, and a node corresponding to the total sales amount may be connected to a node corresponding to the sales quantity through an edge. It should be understood that the foregoing example is used for description. This is not specifically limited in this application.

The model configuration unit 231 in the model layer 230 is configured to receive a model configuration request sent by the analysis user, and update the analysis model database 232 based on the model configuration request. The analysis model database 232 may include an analysis model and a model mapping relationship between an analysis model and a node.

During specific implementation, the model configuration request may include model data of a target analysis model that the analysis user requests to set, and a target model mapping relationship between the target analysis model and the target node. The model configuration unit 231 may add the target analysis model and the target model mapping relationship to the analysis model database 232 based on the model configuration request. Briefly, the analysis user may create an analysis model based on a requirement of the analysis user, and define a model mapping relationship between the analysis model and a node. Specifically, the analysis user may determine, based on a metric, a dimension, table structure information, and an entity that need to be used by the analysis model, the node associated with the analysis model, and establish the model mapping relationship between the node and the analysis model.

For example, if the analysis user needs to create an analysis model of a sales performance change, assuming that the analysis model needs to be determined by using a result of comparison between net sales revenue year-on-year and a target threshold, where the net sales revenue year-on-year is a ratio of net sales revenue of a current period to net sales revenue of a previous period, and is usually used to evaluate a sales performance change, the analysis model needs to use at least the following three metrics: the net sales revenue of the current period, the net sales revenue of the previous period, and the target threshold. In this case, the analysis model may establish a model mapping relationship with nodes corresponding to the foregoing three metrics. In this way, when performing data analysis, the analysis model may automatically obtain a node in the knowledge graph based on the model mapping relationship, then obtain, based on the semantic mapping relationship, metadata corresponding to the node, obtain, based on the physical mapping relationship, table data corresponding to the metadata, and then complete data analysis based on the table data. It should be understood that the foregoing example is used for description. This is not specifically limited in this application.

It may be understood that the model configuration unit 231 completes configuration of the model mapping relationship between an analysis model and a node, the node configuration unit 221 and the generation unit 222 complete configuration of the semantic mapping relationship between a node in the knowledge graph and metadata, and the metadata configuration unit 211 and the mapping unit 212 complete configuration of the physical mapping relationship between metadata and table data. Therefore, an analysis model is associated with a node in the knowledge graph, the node is associated with metadata, and the metadata is associated with original table data. By using a multi-layer mapping relationship, an analysis model can be decoupled from underlying table data, and a change of the underlying table data does not affect the analysis model, thereby making the analysis model highly flexible and adaptable.

Further, after an analysis model is configured, the analysis user may initiate a data analysis request to the data analysis system 200. The model configuration unit 231 may invoke the analysis model, obtain a node in the knowledge graph based on the model mapping relationship, obtain, based on the semantic mapping relationship, metadata corresponding to the node, obtain, based on the physical mapping relationship, table data corresponding to the metadata, complete data analysis based on the table data to obtain a data analysis result, store the result in the storage system 300, and generate table data corresponding to the data analysis result. The mapping unit 212 in the metadata layer may generate metadata corresponding to the table data, and obtain a physical mapping relationship between the metadata and the table data. The generation unit 222 in the semantic layer may generate a label of a node corresponding to the metadata, and obtain a semantic mapping relationship between the node and the metadata. After the knowledge graph has the node corresponding to the analysis result, when querying the analysis result, the query user may query the analysis result in a natural language, thereby improving query experience.

The extraction unit 233 in the model layer 230 is configured to receive a data query request sent by the client 100, and extract a keyword from the data query request.

During specific implementation, the data query request includes a query text in a natural language. For example, the query text in a natural language may be: "I want the sales report for this year", "Please give me the sales data of all products for the fourth quarter of last year", or "How many interns are there in the department S". It should be understood that a conventional query statement is usually a programming-type query statement, for example, a structured query language (structured query language, SQL). The query text in a natural language is closer to a human daily language than the SQL, so that a non-technical query user can easily implement data query, thereby reducing learning costs of the query user. In the conventional query statement, not only a query language structure needs to be learned, but also names of various tables need to be remembered. For example, a name of a balance sheet may be a character string, and the query user needs to enter this character string when performing query in the SQL. According to the method in this application, "I need the balance sheet" is directly entered, and the query user can obtain a corresponding query result by directly entering a term, which is more efficient.

It should be noted that the query text in the data query request may be a text directly entered by the query user, or the query text may be a text generated by using a speech recognition technology after the query user enters a speech. This is not specifically limited in this application.

Optionally, the extraction unit 233 may perform word segmentation processing on the query text in the data query request to obtain a plurality of segmented words corresponding to the query text, and then select the keyword from the plurality of segmented words through filtering, where the keyword is a segmented word related to data query. During specific implementation, a word segmentation manner may include statistical word segmentation, dictionary-based word segmentation, machine learning word segmentation, and the like. The statistical word segmentation method is to use a statistical model to determine which parts of a query statement need to be segmented into words, and the statistical model may be a Markov model (Markov model), a hidden Markov model (hidden Markov model, HMM), or the like. The dictionary-based word segmentation method is to use a known dictionary to match a segmented word in a text, and the dictionary may include common words and terms. The machine learning word segmentation method is to use a machine learning algorithm to train a model, and specifically use a sample set to train a machine learning model, so that the machine learning model has a capability of generating a segmented word based on an input query text. It should be understood that the foregoing example of word segmentation is used for description. Word segmentation may alternatively be implemented in another manner. For example, word segmentation is implemented by using a natural language processing tool such as jieba. Different word segmentation methods may be required in different languages and service scenarios. This is not specifically limited in this application.

During specific implementation, after the plurality of segmented words are obtained, the keyword may be selected from the plurality of segmented words in a plurality of filtering manners. The filtering manners may include stop word-based filtering, part-of-speech-based filtering, word frequency-based filtering, and term frequency-inverse document frequency (term frequency-inverse document frequency, TF-IDF)-based filtering. Stop word-based filtering is selecting a keyword from a plurality of segmented words through stop word filtering. Stop words are words with low actual meanings, for example, interjections like "ah", "hey", and "oh", for example, function words like "of", "yes", and "and", for example, pronouns like "you", "I", and "she", for example, prepositions like "at", "in", and "with". Part-of-speech-based filtering is determining a part-of-speech of each segmented word, such as a noun, a verb, or an adjective, and then determining a keyword based on the part-of-speech. In the query field, nouns are generally of higher importance. Word frequency-based filtering is analyzing a frequency of each word in a query statement. A highfrequency word is usually an important keyword. Word frequency statistics are used to determine which words repeatedly appear in historical query of the query user, and these words may be determined as keywords. TD-IDF is a weighting technology for determining a keyword in a text. By determining a TD-IDF score of each segmented word, a word with a high score is a keyword. It should be understood that the foregoing methods are used as examples for description. The keyword may be selected from the plurality of segmented words through filtering by using more methods, or the keyword may be determined by combining the foregoing plurality of methods. This is not specifically limited in this application.

The graph query unit 224 in the semantic layer 220 is configured to: receive the keyword sent by the extraction unit 233, match the keyword with a label of a node in the knowledge graph, to determine a target node that matches the keyword, and determine, based on the semantic mapping relationship, the target metadata corresponding to the target node.

During specific implementation, the target node that matches the keyword may be determined based on each attribute in the label that matches the keyword. If a matching result is a plurality of nodes, the data analysis system 200 may return prompt information to the client 100, where the prompt information is used to prompt the query user to enter a more detailed query text; and further determine the target node based on the more detailed query text entered by the query user, and then determine the target metadata. The following is an example in which a user A performs table lookup in a natural language:
User A: "I want to view the company's financial statements";
System: "May I ask if you need the profit statement or the balance sheet";
User A: "Profit statement";
System: "Would you like to view the quarterly report or the annual report";
User A: "Last quarter";
System: "OK, here is the link to the balance sheet for the last quarter: [Link]".

The foregoing example is used for description. This is not specifically limited in this application. During specific implementation, the system may set various dialog templates in advance, determine, based on a plurality of nodes obtained through matching with a keyword corresponding to a query text entered by the query user last time, a dialog to be sent to the query user next time, then determine a new keyword based on a query text returned by the query user next time, and so on. Through continuous communication with the query user, the target node corresponding to the target data that the query user requests to access is finally determined, and the metadata of the target node is obtained.

It should be understood that, in conventional data query, actual semantics of a query text of the query user can be first obtained only through natural language processing, then database retrieval is performed based on the semantics, and a prompt message is fed back based on a retrieval result. This process of first performing natural language processing and then performing retrieval causes a slow system response, especially for a large and complex database, causes a slower system response. In this application, a node that matches a keyword is obtained through matching in the knowledge graph, and a prompt message is sent to the query user based on a plurality of pieces of metadata corresponding to the node. Because of the knowledge graph, a system response is fast, thereby improving user experience of the query user.

Optionally, one node may correspond to a plurality of pieces of metadata. After determining the target node, the system may send, with reference to a dialog template, prompt information to the query user based on a plurality of pieces of metadata associated with the target node, to ask specific metadata for which the query user requires corresponding data, and determine the target metadata based on a result fed back by the query user.

Optionally, there may be one or more target nodes, and there may be one or more pieces of target metadata. This is because nodes in the knowledge graph include a metric node, a dimension node, and an entity node. The target data queried by the query user may correspond to a plurality of pieces of target metadata. For example, the query user requests to query a balance sheet of the subsidiary A for four quarters of last year. In this case, matched nodes include an entity node "subsidiary A", a dimension node "time", and a metric node "balance sheet". The foregoing example is used for description. This is not specifically limited in this application.

It should be noted that, if a label of a node is a label of a natural language, a keyword may be directly matched with the label. If a label of a node is a character string or a vector, and the character string or the vector is obtained after a natural language is encoded, a keyword may be converted into a character string or a vector in a same encoding manner, and then the character string or the vector is matched with the label. It should be understood that vector or character string matching is actually semantic matching. In this application, in a semantic matching manner, natural language processing does not need to be performed on a query text entered by the query user, the system does not need to deeply understand a meaning of the text of the query user, and data query may be directly implemented through label matching, thereby improving query efficiency.

The table query unit 214 in the metadata layer 210 is configured to: receive the target metadata sent by the graph query unit 224, determine, based on the physical mapping relationship, the target data corresponding to the target metadata, and return the target data to the query user. It should be understood that the metadata includes the storage address of the table data. In this case, the target data may be read based on the storage address and returned to the query user.

Optionally, when there are a plurality of pieces of target metadata, table data corresponding to each piece of target metadata may be obtained, and then final target data is determined based on a field, a table, and a database corresponding to each piece of target metadata. Specifically, metadata corresponding to an entity node and a dimension node may be used as filtering fields for filtering in table data corresponding to a metric node, to obtain target data required by the query user. Certainly, the table data corresponding to the plurality of pieces of target source data may alternatively be determined with reference to information such as an edge connection between nodes in the knowledge graph and a node attribute label. Specifically, a rule for generating the target data based on the plurality of pieces of target metadata may be flexibly configured based on an actual application scenario.

The foregoing example is still used. The query user requests to query the balance sheet of the subsidiary A for the four quarters of last year, the matched nodes include the entity node "subsidiary A", the dimension node "time", and the metric node "balance sheet", "subsidiary A" and "quarter" are used as filtering fields for filtering in the balance sheet of the whole year of the company, to obtain the balance sheet of the subsidiary A for the four quarters of last year. It should be understood that the foregoing example is used for description. This is not specifically limited in this application.

Briefly, one table may include a plurality of fields, and the query user may want to view only two or three fields, or want to view a field 1 in a table A and a field 2 in a table B. After a semantic mapping relationship is established between metadata of each field and a semantic node, when the query user performs data query, the query user only needs to enter a field included in a table that the query user wants to view, and the system may automatically generate, in a semantic node matching manner, the table required by the query user, thereby making the query method more flexible.

It should be noted that FIG. 1 is an example division manner. The extraction unit 233 may alternatively be deployed in the client 100. In other words, the client 100 locally implements keyword extraction. The extraction unit 233 may alternatively be deployed in the semantic layer 220. This is not limited in this application.

It should be understood that the data analysis system 200 may flexibly configure an analysis model with reference to the knowledge graph, to implement association impact analysis, node importance analysis, and the like, and may further implement flexible data query with reference to the knowledge graph, for example, query based on a storage path, query based on a knowledge graph slice or subgraph, or query based on a node attribute. This greatly facilitates data analysis of the analysis user. In addition, the system architecture is highly scalable, and the analysis user can flexibly set an analysis model based on a service requirement. The data analysis system 200 may further recommend, based on a query request entered by the query user, the query user to create an analysis model of a specific type, to complete data exploration. The analysis user may use the data analysis system 200 to complete applications such as data exploration, data mining, and data analysis.

It should be understood that, in this application, the analysis user is a user who creates a model and configures a plurality of mapping relationships in the data analysis system 200, and the query user is a user who queries data. In a specific implementation process, the analysis user and the query user may be different users, or may be a same user. This is not specifically limited in this application.

In conclusion, the data analysis system provided in this application includes a metadata layer, a semantic layer, and a model layer. The metadata layer is configured to manage metadata, and establish a physical mapping relationship between metadata and table data of an underlying physical table. The semantic layer is configured to: manage a knowledge graph, where the knowledge graph includes a plurality of nodes and a plurality of edges; and establish a semantic mapping relationship between a node and metadata, where semantics of a label of the node is related to the metadata. The model layer is configured to manage an analysis model, and establish a model mapping relationship between an analysis model and a node. By using a multi-layer mapping relationship, the data analysis system can decouple an analysis model from underlying table data, and variation of the underlying data does not affect the analysis model, thereby making the analysis model highly flexible and adaptable. In addition, because a node in the knowledge graph includes a semantic label, users can complete data query in a natural language, and the data analysis system may match a keyword in a query text entered by the user with a semantic label of a node, to determine a first node corresponding to the keyword, so that a data query process changes from retrieval to matching. This improves query efficiency. In addition, the user does not need to learn instructions related to database query, and can implement data query by entering a natural language. This reduces learning costs of the user and improves user experience.

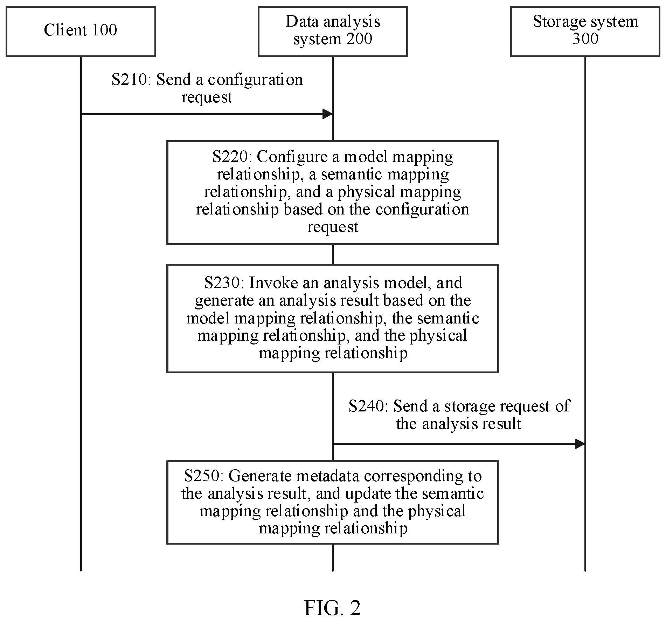

The foregoing describes in detail the data analysis system provided in this application with reference to FIG. 1. The following describes a data analysis method provided in this application with reference to FIG. 2 to FIG. 6.

FIG. 2 is a schematic flowchart of steps of a configuration method in a data analysis method according to this application. The method may be applied to the data analysis system 200 shown in FIG. 1. As shown in FIG. 2, the method may include the following steps.

S210: A client 100 sends a configuration request to the data analysis system 200. This step may be implemented by the model configuration unit 231, the node configuration unit 221, and the metadata configuration unit 211 in the embodiment in FIG. 1.

Optionally, the configuration request may include one or more of a model configuration request, a node configuration request, and a metadata configuration request. The metadata configuration request may include metadata that an analysis user requests to set and a physical mapping relationship between metadata and table data. The node configuration request may include a label of a node that an analysis user requests to set and a semantic mapping relationship between a node and metadata. The model configuration request includes model data and a model mapping relationship between an analysis model and a node. It should be noted that for specific descriptions of the model configuration request, the node configuration request, and the metadata configuration request, refer to related content in the embodiment in FIG. 1. Details are not described herein again.

S220: The data analysis system 200 configures the model mapping relationship, the semantic mapping relationship, and the physical mapping relationship based on the configuration request. This step may be implemented by the model configuration unit 231, the node configuration unit 221, and the metadata configuration unit 211 in the embodiment in FIG. 1.

Optionally, the data analysis system 200 may update the physical mapping relationship between metadata and table data based on the metadata configuration request. The metadata includes at least table structure information of the table data and a storage address of the table data. The table structure information may include a field, a table name, and a database name, and may further include information such as a data type, an index, a primary key, and a foreign key. The metadata may further include a service meaning, a usage, a description, a data dictionary, and the like. This is not specifically limited in this application.

Optionally, the data analysis system 200 may update the semantic mapping relationship between a node and metadata based on the node configuration request. Semantics of a label of the node is related to the metadata. The label of the node may be a semantic representation of the metadata that establishes the semantic mapping relationship with the node, for example, a semantic representation of a field in the metadata, a semantic representation of a table name, or a semantic representation of a database name. This is not specifically limited in this application. The label of the node may alternatively be a name of a metric or a dimension, the metric or the dimension needs table data having a plurality of fields to participate in calculation, and table data corresponding to the metadata associated with the node is the foregoing table data participating in calculation. The label of the node may alternatively be a name of an entity, for example, a subsidiary A, a subsidiary B, or a supplier C, the metadata associated with the node has an entity association relationship with the entity, and the entity association relationship may include an ownership relationship, a dependency relationship, a parent-child relationship, a cooperation relationship, a subordinate relationship, a purchase relationship, an upstream/downstream relationship, a location relationship, or the like. This application imposes no limitation on the entity association relationship.

Optionally, a label of each node may include one or more attributes, and each attribute may describe a semantic representation of the node from different dimensions. For example, the label of the node may include the following attributes: a field name, a data type, and an is-measure field. For example, a label of a node A includes a label 1: basketball player, and a label 2: programmer. The label 1 includes the following attributes: team, location, field score, and the like. The label 2 includes the following attributes: company, job level, length of service, and the like. The foregoing example is used for description. This is not specifically limited in this application. It should be understood that a multi-attribute node label may make a semantic representation of metadata richer and more accurate. When performing data query on a knowledge graph, a query user may use different attributes for node filtering, sorting, and searching, thereby making data query and retrieval more flexible and accurate.

To better understand this application, the following describes a label design rule in this application with reference to Table 1. Table 1 is an example table of a node design rule in the knowledge graph provided in this application. According to the design rule, the analysis user may flexibly configure a node in the knowledge graph, and the system may also automatically generate a node in the knowledge graph according to the design rule. A label of a node is an attribute group. Therefore, the following table provides an example based on an attribute.

**Table 1 Example table of the node design rule in the knowledge graph**

| Vertical layered design | Type | Attribute | Description |
|---|---|---|---|
| Common information layer | Application common node | None | Management node |
| | Subject-area common node | None | Management node |
| Semantic metric/dimension layer | Metric node | Atomic metric | Measurement of service event behavior, named in a form of action + measurement, such as a payment amount and a quantity of registered users; and indivisible metric in a service |
| | | Derivative metric | Derivative metric = Atomic metric + Statistical dimension + Time limit + General limit. The derivative metric is composed of an atomic metric, a time period modifier, and another modifier, and defines a service statistics scope of the atomic metric. |
| | | Scenario | Modification type |
| | | Scenario value | Modifier |
| | | Time period | None |
| | Dimension node | Dimension name | None |
| | Physical database node | Database name | None |
| | | Database type | None |
| | Physical table node | Table name | None |
| | | Schema name | None |
| | | Database name | None |
| Physical table information layer | | Database type | None |
| | Physical field node | Field name | None |
| | | Data type | None |
| | | Is-measure field | None |
| | Physical attribute member node | Attribute member name | None |
| | | Data type | None |

As shown in Table 1, nodes in the knowledge graph may be designed based on three layers: the physical table information layer, the semantic metric/dimension layer, and the common information layer. The node designed based on the physical table information layer is a label generated based on metadata of a physical table, that is, semantics of a label of the node is the same as that of metadata, as described above. For example, the physical table node is a node label designed based on semantics of the table name. For example, the physical field node is a node label designed based on the field name. The node designed based on the semantic metric/dimension layer is a label generated based on semantics of a metric/dimension, and metadata that establishes a semantic mapping relationship with this type of node participates in calculation of the metric. The node designed based on the common information layer is a label generated based on entity data, that is, the entity node described above. It should be understood that Table 1 is an example of label design. This is not specifically limited in this application.

Further, after a node in the knowledge graph is updated based on the node configuration request, an edge between nodes in the knowledge graph may be generated according to an edge design rule. Optionally, the edge design rule may include an intra-table relationship rule, an inter-table relationship rule, and a relationship rule between a metric/dimension and a table. An edge generated according to the intra-table relationship rule indicates that there is an intra-table relationship between metadata corresponding to nodes. An edge generated according to the inter-table relationship rule indicates that there is an inter-table relationship between metadata corresponding to nodes. An edge generated according to the relationship rule between a metric/dimension and a table indicates that there is a relationship between a metric/dimension and a table between metadata corresponding to nodes. For specific descriptions of the edge rule, refer to related content in the embodiment in FIG. 1. Details are not described herein again.

To better understand this application, the following describes an edge design rule in this application with reference to Table 2. Table 2 is an example table of the edge design rule in the knowledge graph provided in this application. According to the design rule, the system may connect, through an edge, nodes having a relationship in the knowledge graph. It should be understood that Table 2 is an example of the edge design rule. This is not specifically limited in this application.

**Table 2 Example table of the edge design rule in the knowledge graph**

| Classification | Edge type | Start point | End point | Description |
|---|---|---|---|---|
| Intra-table relationship | Primary key subordinate (field attribution table) | Physical field (primary key) | Physical table | Obtain a primary key of a table based on the primary key subordinate |
| | General subordinate (field attribution table) | Physical field | Physical table | None |
| | Field value attribution | Physical field value | Physical field | None |
| Inter-table relationship | Table relationship | Table | Table | Relationship between tables |
| | Foreign key correspondence | Field value | Field | Correspondence between foreign keys of cross-table fields, used for table association |
| | Equivalence between fields | Field | Field | Having a same meaning, and corresponding to a same dimension/metric. Metric fields having a same meaning in different physical tables may be aligned by pointing to a same metric node. |
| Relationship between a metric/dimension and a table | Metric and physical field | Physical field | Metric | None |
| | Dimension and physical field | Physical field | Dimension | None |
| | Dimension value and dimension | Dimension value | Dimension | None |
| | Dimension value and field value | Field value | Dimension value | None |
| | Measure and field value | Field (measure) | Field value | Row-based storage metric, which needs to be defined by measure field + field value |
| | Field value and metric | Field value | Metric | None |
| | Metric and dimension | Dimension | Metric | Describing a relationship between a metric and a dimension |

As shown in Table 2, the data analysis system 200 may generate edges between nodes based on the intra-table relationship, the inter-table relationship, and the relationship between a metric/dimension and a table, and nodes corresponding to metadata having an association relationship are connected through an edge, so that an association relationship between table data can also be displayed in the knowledge graph. This can improve efficiency and accuracy of association analysis.

Optionally, the data analysis system 200 may update the model mapping relationship between an analysis model and a node based on the model configuration request, and then add, to the analysis model database 232, an analysis model that the analysis user requests to configure, to be specific, may determine, based on the model data in the model configuration request, a metric, a dimension, table structure information, and an entity that need to be used by the analysis model, then determine a node associated with the analysis model, and establish a model mapping relationship between the node and the analysis model.

It may be understood that after configuration of the model mapping relationship between an analysis model and a node, configuration of the semantic mapping relationship between a node in the knowledge graph and metadata, and configuration of the physical mapping relationship between metadata and table data are completed, an analysis model is associated with a node in the knowledge graph, the node is associated with metadata, and the metadata is associated with original table data. In this way, by using a multi-layer mapping relationship, an analysis model can be decoupled from underlying table data, and a change of the underlying table data does not affect the analysis model, thereby making the analysis model highly flexible and adaptable.

S230: The data analysis system 200 invokes an analysis model, and generates an analysis result based on the model mapping relationship, the semantic mapping relationship, and the physical mapping relationship. This step may be implemented by the model configuration unit in the embodiment in FIG. 2.

During specific implementation, after the analysis model is configured, the analysis user may initiate a data analysis request to the data analysis system 200. The data analysis system 200 may invoke the analysis model, obtain a node in the knowledge graph based on the model mapping relationship, obtain, based on the semantic mapping relationship, metadata corresponding to the node, obtain, based on the physical mapping relationship, table data corresponding to the metadata, and input the table data into the analysis model for data analysis to obtain the data analysis result. Alternatively, the data analysis system 200 may automatically invoke the analysis model, and perform data analysis based on the model mapping relationship, the semantic mapping relationship, and the physical mapping relationship. In this way, when data is continuously updated, the analysis model also continuously and automatically performs data analysis and exploration.

S240: The data analysis system 200 sends a storage request of the analysis result to a storage system 300. This step may be implemented by the model configuration unit in the embodiment in FIG. 2.

During specific implementation, the storage system 300 may store the analysis result in a database table, and generate table data corresponding to the analysis result.

S250: The data analysis system 200 generates metadata corresponding to the analysis result, and updates the semantic mapping relationship and the physical mapping relationship. This step may be implemented by the generation unit 222 and the mapping unit 212 in the embodiment in FIG. 1.

Optionally, the data analysis system 200 may generate, based on table structure information and a storage address of the table data corresponding to the analysis result, the metadata corresponding to the analysis result, and obtain a physical mapping relationship between the metadata and the table data of the analysis result. Further, the data analysis system may recognize, by using a recognition model, information about a field included in the metadata, generate a label of a node based on semantic information, establish a semantic mapping relationship between the metadata and the node, and finally update an edge between nodes in the knowledge graph according to the edge design rule. In this way, after the knowledge graph has the node corresponding to the analysis result, when querying the mapping result, the query user may query the analysis result in a natural language, thereby improving query experience.

It should be noted that, when generating a label of a node, the data analysis system 200 may generate the label of the node based on the content described in S220 and the node design rule described in Table 1, and generate an edge between nodes according to the edge design rule described in Table 2. Details are not described herein again. It should be understood that the design rules described in Table 1 and Table 2 may be used by the system to automatically generate a node, a label, and an edge, and may also be used by the analysis user to configure a node, a label, and an edge. This is not limited in this application.

It should be understood that the step procedure shown in FIG. 2 is a step procedure in an application scenario. In this application scenario, an analysis model and various mapping relationships are first generated based on configuration of the analysis user, and then various mapping relationships of an analysis result are automatically updated by the system. In another application scenario, a physical mapping relationship and a semantic mapping relationship of an analysis result may be manually configured. For a manual configuration step procedure, refer to S210 and S220. Details are not described herein again.

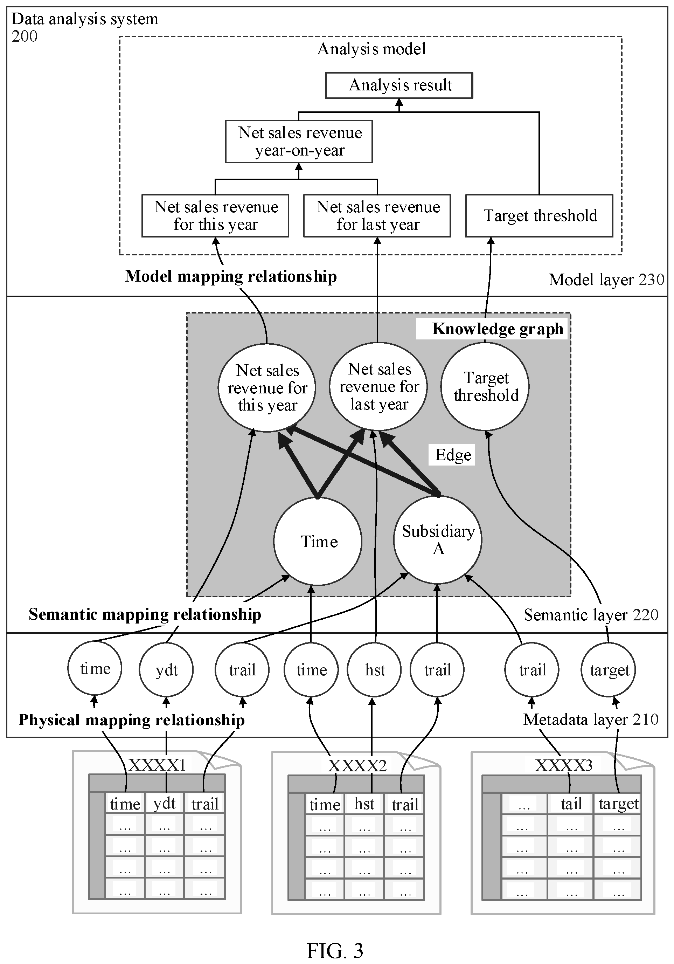

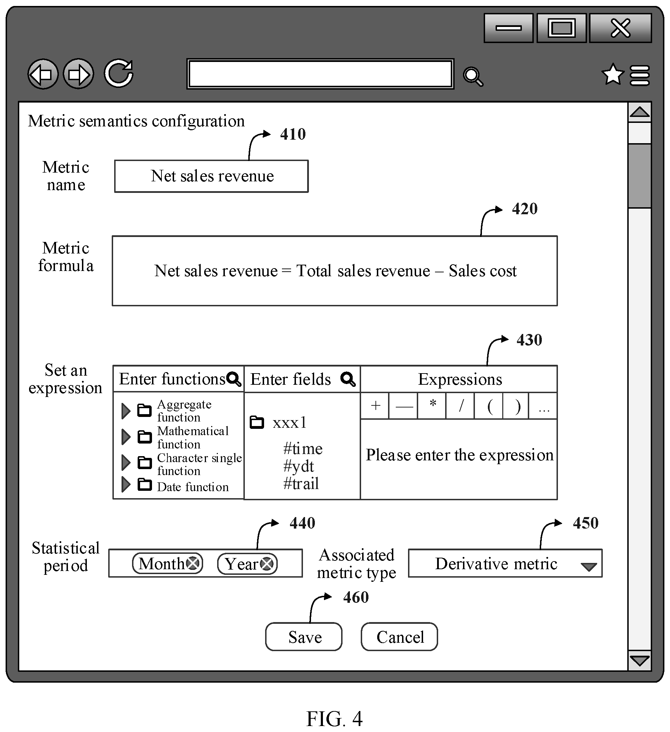

To better understand this application, the following further describes the configuration method in the data analysis method provided in this application with reference to FIG. 3 to FIG. 6. FIG. 3 further explains the configuration method shown in FIG. 2 by using a specific application scenario as an example, and FIG. 4 to FIG. 6 further explain the configuration method shown in FIG. 2 by using a specific application interface as an example.

FIG. 3 is a flowchart of configuration steps in an application scenario. In the application scenario shown in FIG. 3, an analysis model configured by the analysis user needs to implement data analysis based on two parameters: "net sales revenue year-on-year" and "target threshold", where "net sales revenue year-on-year" needs to implement data analysis based on two parameters: "net sales revenue for this year" and "net sales revenue for last year". In this case, the analysis model requires the following parameters: "net sales revenue for this year", "net sales revenue for last year", and "target threshold". Therefore, S210 and S220 may be performed to establish model mapping relationships between the three parameters and nodes in the knowledge graph in the semantic layer 220. As shown in FIG. 3, a model mapping relationship is established between a "net sales revenue for this year" parameter and a "net sales revenue for this year" node, a model mapping relationship is established between a "net sales revenue for last year" parameter and a "net sales revenue for last year" node, and a model mapping relationship is established between a "target threshold" parameter and a "target threshold" node.

Further, a semantic mapping relationship is established between the "net sales revenue for this year" node and metadata "ydt", a semantic mapping relationship is established between the "net sales revenue for last year" node and metadata "hst", and a semantic mapping relationship is established between the "target threshold" node and metadata "target". This is in the example shown in FIG. 3.

Further, a physical mapping relationship is established between the metadata "ydt" and a field "ydt" in a table "XXX1", a physical mapping relationship is established between the metadata "hst" and a field "hst" in a table "XXX2", and a physical mapping relationship is established between the metadata "target" and a field "target" in a table "XXX3".

Further, the data analysis system 200 may generate an edge between nodes in the knowledge graph. For example, in the graph shown in FIG. 3, an edge relationship is established between the "net sales revenue for this year" node and a "time" node, and an edge relationship is established between the "net sales revenue for this year" node and a "subsidiary A" node, where the "subsidiary A" node may be a physical node, and the "time" node may be a dimension node. In FIG. 3, a bold straight line represents an edge relationship between nodes, and thin curves represent various mapping relationships. It should be understood that the "subsidiary A" node and the "time" node may also establish a semantic mapping relationship with metadata. For example, a semantic mapping relationship is established between the "time" node shown in FIG. 3 and a plurality of pieces of metadata "time", and a physical mapping relationship may be established between different metadata "time" and a field "time" in different tables. Examples are not enumerated herein.

It may be understood that, after the analysis model shown in FIG. 3 is created, and the model mapping relationship, the semantic mapping relationship, and the physical mapping relationship are configured, the data analysis system 200 may perform S230 to start data analysis, to be specific, first determine, according to a logical rule of the analysis model, parameters that need to be obtained, namely, "net sales revenue for this year", "net sales revenue for last year", and "target threshold", determine, based on the model mapping relationship, the three nodes corresponding to the three parameters, determine, based on the semantic mapping relationship, the metadata corresponding to the three nodes, obtain, based on the physical mapping relationship, table data of "net sales revenue for this year", "net sales revenue for last year", and "target threshold", and complete data analysis based on the table data to obtain an analysis result.

Further, the data analysis system 200 performs S240 to store the analysis result in the storage system 300, that is, in various table data shown at the bottom of FIG. 3, performs S250 to generate metadata based on the table data, establishes a physical mapping relationship, creates a new node in the knowledge graph, generates a label of the node based on semantics of the metadata, and updates an edge relationship between nodes in the knowledge graph.

It may be understood that an object actually associated with the analysis model in FIG. 3 is a node in the knowledge graph instead of underlying table data. By using a multi-layer mapping relationship, the analysis model may be decoupled from the underlying table data, and a change of the underlying table data does not affect configuration of the analysis model, thereby making establishment of the analysis model more flexible and the system architecture highly scalable. The analysis user can flexibly set the analysis model based on a service requirement, and the system may even recommend creation of some analysis models that can further process the analysis result to the analysis user based on the analysis result, to guide the analysis user to further perform data mining and exploration. This improves user experience of the analysis user.

It should be noted that, in the example shown in FIG. 3, assuming that semantics of a label of the "net sales revenue for this year" node is the same as that of the metadata "ydt" connected to the node, the semantic mapping relationship is established between the two. In some other embodiments, semantics of a node may be a name of a metric, and a connection relationship is established between metadata that participates in calculation of the metric and the node. For example, in the scenario shown in FIG. 3, if the storage system 300 does not have a table for directly collecting statistics on the net sales revenue for this year, a semantic mapping relationship may be established between metadata whose semantics is "total sales revenue for this year" and metadata whose semantics is "total sales cost for this year" and the "net sales revenue for this year" node based on net sales revenue for this year = total sales revenue for this year - total sales cost for this year. Details are not described herein again.

It should be noted that, in the example shown in FIG. 3, metadata in the metadata layer is described by using a field as an example. With reference to the foregoing content, it can be learned that the metadata may alternatively be a database name, a table name, a field value, and the like. In addition, there is an attribution relationship between metadata, a metadata graph may be created based on the attribution relationship, each node in the graph represents one piece of metadata, and an edge between nodes represents an attribution relationship between metadata. FIG. 3 is an example. This is not limited in this application.

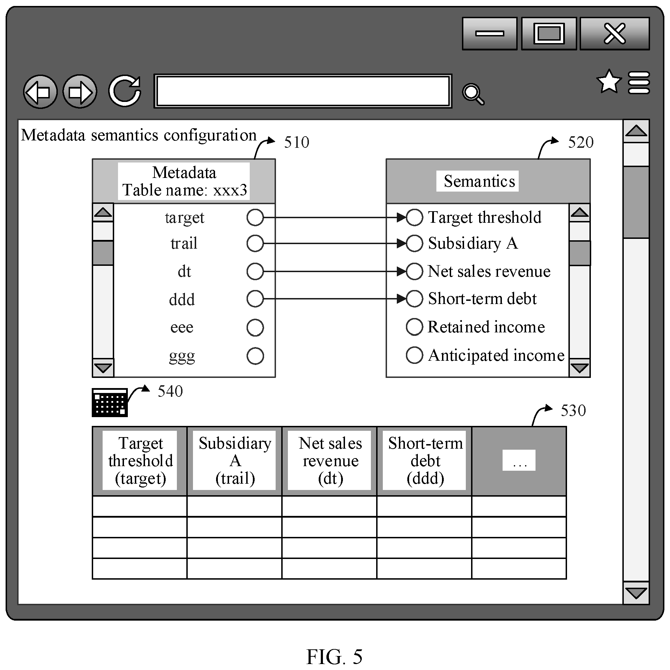

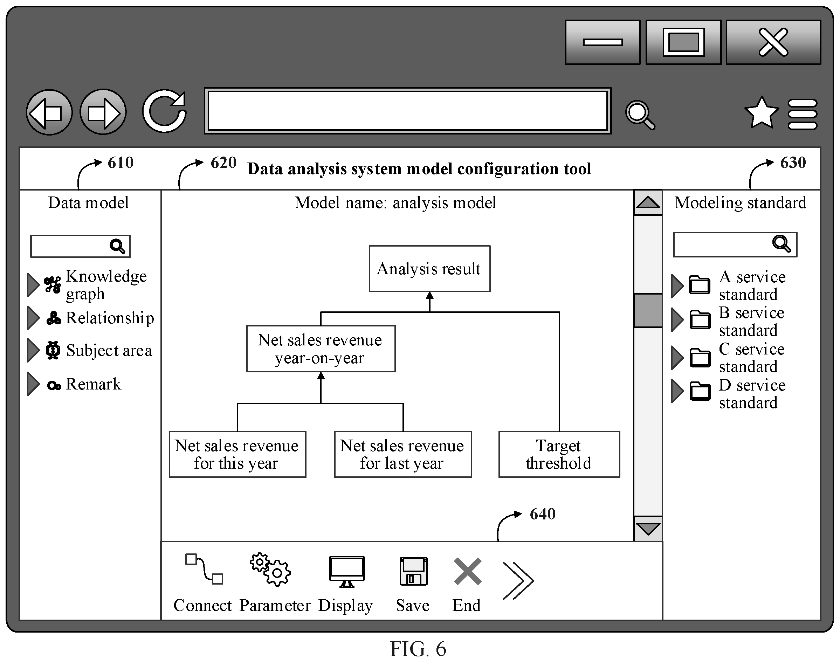

To better understand the configuration method described in S210 to S250 in this application, the following further provides descriptions with reference to FIG. 4 to FIG. 6. FIG. 4 to FIG. 6 show some example interfaces provided in this application. An interface shown in FIG. 4 is used by an analysis user to configure a label of a metric node, and the analysis user may configure information such as a metric name and a metric formula through the interface. FIG. 5 shows another example interface in a data analysis method according to this application, and the interface is used by an analysis user to configure a semantic mapping relationship. FIG. 6 shows another example interface in a data analysis method according to this application, and the interface is used by an analysis user to configure a model mapping relationship. The following describes FIG. 4 to FIG. 6.

FIG. 4 shows an example interface in a data analysis method according to this application. The interface is mainly configured to configure a label of a node with a metric/dimension name, that is, a node at a semantic metric/dimension layer shown in Table 1, for example, a metric node or a dimension node. Specifically, the interface shown in FIG. 4 is described by using the "net sales revenue for this year" node shown in FIG. 3 as an example.

As shown in FIG. 4, the interface may include a metric name input area 410, a metric formula input area 420, an expression input area 430, a statistical period selection area 440, an associated metric selection area 450, and a save control 460. The following describes each area and control on the interface.

The metric name input area 410 is configured to input a metric name. The metric name may be used as a label of a node, and may be specifically one of attributes included in the label. For example, a metric that is set in FIG. 4 is "net sales revenue".

The metric formula input area 420 is configured to input a calculation formula of a metric formula. The calculation formula is a natural language expression of the metric formula.

The expression input area 430 is configured to input an expression of the metric formula. The expression is an expression of processing logic of the metric formula. An analysis user may select a function to be invoked and an input field to complete the expression of the metric formula. It should be understood that both the calculation formula in the metric formula input area 420 and the expression that is input in the expression input area 430 are used to describe the metric formula, so that a system establishes a semantic mapping relationship between metadata and a node based on the metric formula.

The statistical period selection area 440 is configured to input a metric time dimension, and collect statistics on annual net sales revenue and monthly net sales revenue. In this way, a generated metric may include net sales revenue for this year, net sales revenue for last year, net sales revenue for this month, net sales revenue for last month, and the like. This is not specifically limited in this application.

The associated metric selection area 450 is configured to input an associated metric type of a metric. The type may be used as some attributes of a label, for example, a derivative metric. For details, refer to descriptions of the metric node in Table 1. Attributes of the metric node may include attributes such as an atomic metric, a derivative metric, a scenario, a scenario value, and a time period.

The save control 460 is configured to save or cancel configuration entered by the analysis user. It should be understood that, after the analysis user clicks "Save", the system may create a node in a knowledge graph, where a label of the node is a metric name that is input in the metric name input area 410, for example, "net sales revenue"; then determine, based on the metric formula described in the metric formula input area 420 and the expression input area 430, metadata participating in metric calculation; and establish a semantic mapping relationship between the metadata and the node.

It should be noted that the interface shown in FIG. 4 is a scenario in which a label of a metric node is manually configured. The analysis user may alternatively obtain information such as metric names and metric formulas of a plurality of metrics by importing metric data, for example, by configuring a metric management platform interface, or by connecting to a metric management platform. The data analysis system 200 may generate a label of a node based on the metric name, and establish a semantic mapping relationship between metadata and a node based on the metric formula. After the metric name is configured by using FIG. 4, the semantic mapping relationship between metadata and a node may be completed through the interface shown in FIG. 5.

FIG. 5 shows another example interface in a data analysis method according to this application. The interface is used by an analysis user to configure a mapping relationship between metadata and semantics. The semantics may be used to generate a label of a node and establish a semantic mapping relationship between the node and the metadata. The metadata is generated based on table data. It should be understood that FIG. 5 is an example of configuring a physical field node. Nodes of other types shown in Table 1 all may be configured based on a similar interface shown in FIG. 5. Details are not described herein again.

As shown in FIG. 5, the interface may include a metadata selection area 510, a semantic configuration area 520, a table display area 530, and a table selection control 540.

The metadata selection area 510 is configured to display metadata that needs to be configured. Each piece of metadata corresponds to one connection control (in FIG. 5, there is one circular control on the right of each piece of metadata). A semantic mapping relationship is established between metadata and a node by connecting a connection control of the metadata to a connection control of semantics displayed in the semantic configuration area 520 on the right. It should be noted that an example in which metadata is a field name is used in FIG. 5 for description. Therefore, all metadata displayed in the metadata selection area 510 in FIG. 5 is a field name. With reference to the foregoing content, it can be learned that the metadata may alternatively be a table name, a database name, a metric name, or the like. Metadata of other types all may be configured through the interface shown in FIG. 5. Examples are not enumerated herein.

The semantic configuration area 520 is configured to display a label of a node, or semantics of metadata. Each piece of semantics corresponds to one connection control (in FIG. 5, there is one circular control on the left of each piece of semantics). A semantic mapping relationship is established between metadata and a node by connecting a connection control of the metadata to a connection control of semantics displayed in the semantic configuration area 520 on the right.

The table display area 530 is configured to display a table for which semantics has been configured. A table header in the table includes an original field and semantics that has been configured by a user.

The table selection control 540 is used by the user to select a table for configuration. After the user selects a table that needs to be configured, a field in the table may be displayed in the metadata selection area 510.

It should be noted that the analysis user creates new metrics "net sales revenue for this year" and "net sales revenue for last year" through the interface shown in FIG. 4. After the creation is completed, the semantic configuration area 520 shown in FIG. 5 may display the created metric "net sales revenue". The user may establish a semantic mapping relationship between metadata "dt" on the left and "net sales revenue" by establishing a connection between the two.

For example, the application scenario shown in FIG. 3 is used as an example in FIG. 5. In FIG. 3, a semantic mapping relationship is established between a field "target" and a "target threshold" node in a table XXX3, and a semantic mapping relationship is established between a field "trail" and a "subsidiary A" node. Similarly, another node in the knowledge graph shown in FIG. 3 may also be configured based on the interface shown in FIG. 5. Examples are not enumerated herein.

It should be noted that the metadata selection area 510 and the semantic configuration area 520 may also display some metadata and semantics for which a semantic mapping relationship has been established, and the analysis user may modify the mapping relationship between metadata and semantics by using a connection control. For example, the system performs semantic recognition on metadata and automatically establishes a semantic mapping relationship. If the analysis user thinks that semantics is not accurate, the user may add customized semantics by using a semantic insertion control, and then connect the customized semantics to the metadata.

It should be understood that, for some metadata whose field semantics can be determined by using a semantic recognition model, a semantic mapping relationship may be automatically established between metadata and a node directly in a semantic recognition manner. However, some fields are merely character strings and have no actual semantic meaning. In this case, the analysis user may enter customized semantics through the interface shown in FIG. 5, and then connect the metadata to the customized semantics.

FIG. 6 is an example diagram of another node configuration interface according to this application. The interface is used by an analysis user to configure an analysis model and configure a model mapping relationship between an analysis model and a node. Specifically, the interface shown in FIG. 6 is described by using the analysis model shown in FIG. 3 as an example.

As shown in FIG. 6, the interface may include a data model selection area 610, a model orchestration area 620, a modeling standard selection area 630, and a toolbar 640.

The data model selection area 610 is used by the analysis user to select a node in a knowledge graph for orchestration. A node participating in orchestration may establish a model mapping relationship with an analysis model. The analysis user may drag a node in the knowledge graph to the model orchestration area 620 to create an analysis model.

The model orchestration area 620 is used by the analysis user to perform analysis model orchestration. The analysis user may drag a node from the data model selection area 610, and select a connection tool or a parameter setting tool from the toolbar 640 to configure analysis logic of an analysis model. For example, the analysis model in FIG. 3 may be established through the interface shown in FIG. 6 in the foregoing manner.

The modeling standard selection area 630 is configured to provide modeling standards of different services for the analysis user. The analysis user may select a modeling standard based on a service requirement of the analysis user to create an analysis model. It should be understood that the modeling standard can reduce a model error and improve modeling efficiency.

The toolbar 640 is configured to provide various modeling tools for the analysis user, for example, a connection tool configured to connect parameters, for example, a save tool configured to save an analysis model. A tool in the toolbar is not limited in this application.

It should be understood that, through the interface shown in FIG. 6, the analysis user may flexibly configure an analysis model through dragging, pulling, and moving by using a visual interface, and flexibly establish a model mapping relationship between an analysis model and a node. The configured analysis model may automatically obtain, by using the model mapping relationship, a semantic mapping relationship, and a physical mapping relationship, data required by the analysis model, and then analyze the data based on analysis logic of the analysis model configured by the analysis user, to obtain an analysis result. The analysis result may be stored in a storage system 300. A data analysis system 200 may generate metadata based on table data of the analysis result, establish a physical mapping relationship, then create a node in a knowledge graph based on the metadata, and establish a semantic mapping relationship. If a query user needs to query the analysis result, the query user may directly enter a natural language for query because of the knowledge graph.

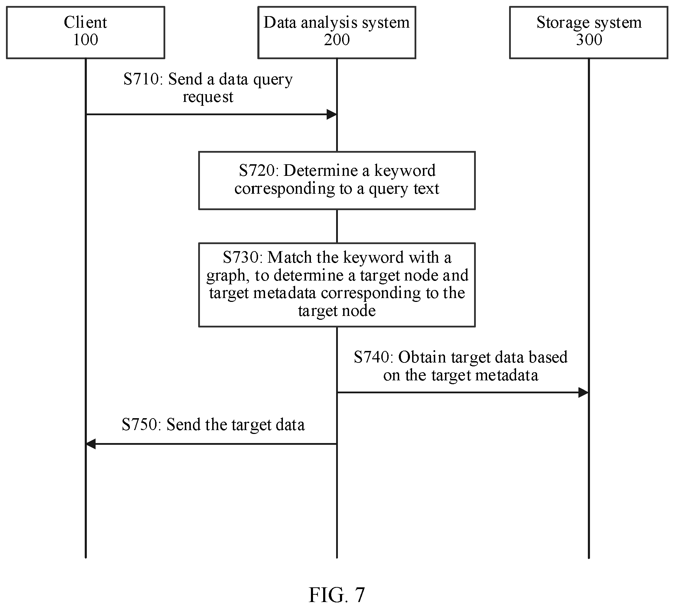

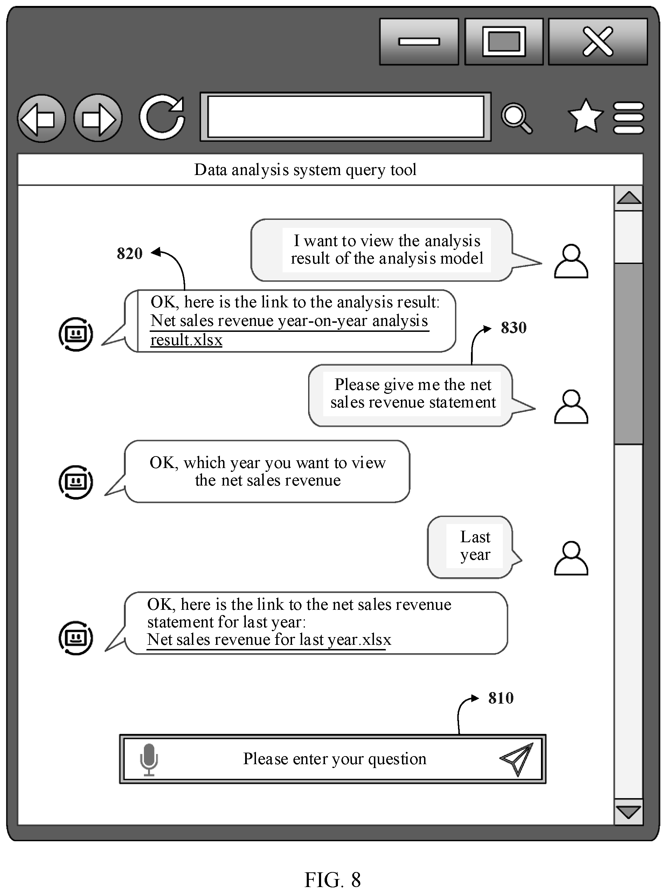

The foregoing describes in detail the step procedure of the configuration method in the data analysis method provided in this application by using FIG. 2 to FIG. 6. The following describes a step procedure of a query method provided in this application with reference to FIG. 7 and FIG. 8.

FIG. 7 is a schematic flowchart of steps of a configuration method in a data analysis method according to this application. As shown in FIG. 7, the method includes the following steps.

S710: A client 100 sends a data query request to a data analysis system 200. This step may be implemented by the extraction unit 233 in the embodiment in FIG. 1.

During specific implementation, the data query request includes a query text, and the query text is a natural language text. For example, the query text in a natural language may be: "I want the sales report for this year", "Please give me the sales data of all products for the fourth quarter of last year", or "How many interns are there in the department S". It should be understood that a conventional query statement is usually a programming-type query statement, for example, an SQL. The query text in a natural language is closer to a human daily language than the SQL, so that a non-technical query user can easily implement data query, thereby reducing learning costs of the query user. In the conventional query statement, not only a query language structure needs to be learned, but also names of various tables need to be remembered. For example, a name of a balance sheet may be a character string, and the query user needs to enter this character string when performing query in the SQL. According to the method in this application, "I need the balance sheet" is directly entered, and the query user can obtain a corresponding query result by directly entering a term, which is more efficient.

It should be noted that the query text in the data query request may be a text directly entered by the query user, or the query text may be a text generated by using a speech recognition technology after the query user enters a speech. This is not specifically limited in this application.

S720: The data analysis system 200 determines a keyword corresponding to the query text. This step may be implemented by the extraction unit 233 in the embodiment in FIG. 1.

Optionally, the extraction unit 233 may perform word segmentation processing on the query text in the data query request to obtain a plurality of segmented words corresponding to the query text, and then select the keyword from the plurality of segmented words through filtering, where the keyword is a segmented word related to data query. During specific implementation, a word segmentation manner may include statistical word segmentation, dictionary-based word segmentation, machine learning word segmentation, and the like. After the plurality of segmented words are obtained, the keyword may be selected from the plurality of segmented words in a plurality of filtering manners such as stop word-based filtering, part-of-speech-based filtering, word frequency-based filtering, and TF-IDF filtering. For descriptions of the plurality of word segmentation manners and the plurality of filtering manners, refer to related descriptions in the embodiment in FIG. 1. Details are not described herein again.

S730: The data analysis system 200 matches the keyword with a graph, to determine a target node and target metadata corresponding to the target node. This step may be implemented by the graph query unit 224 in the embodiment in FIG. 1.

Optionally, the data analysis system 200 may determine, based on each attribute in a label that matches the keyword, one or more nodes that match the keyword. The data analysis system 200 may return prompt information to the client 100 based on a matching result, where the prompt information is used to prompt the query user to enter a more detailed query text; and further determine the target node based on the more detailed query text entered by the query user, to determine the target metadata. During specific implementation, the data analysis system 200 may set various dialog templates in advance, determine, based on a plurality of nodes obtained through matching with a keyword corresponding to a query text entered by the query user last time, a dialog to be sent to the query user next time, then determine a new keyword based on a query text returned by the query user next time, and so on. Through continuous communication with the query user, the target node corresponding to the target data that the query user requests to access is finally determined, and the metadata of the target node is obtained.

Optionally, there may be one or more target nodes, and there may be one or more pieces of target metadata. This is because nodes in the knowledge graph include a metric node, a dimension node, and an entity node. The target data queried by the query user may correspond to a plurality of pieces of target metadata. For example, the query user requests to query a balance sheet of a subsidiary A for four quarters of last year. In this case, matched nodes include an entity node "subsidiary A", a dimension node "time", and a metric node "balance sheet". The foregoing example is used for description. This is not specifically limited in this application.

It should be understood that, in conventional data query, actual semantics of a query text of the query user can be first obtained only through natural language processing, then database retrieval is performed based on the semantics, and a prompt message is fed back based on a retrieval result. This process of first performing natural language processing and then performing retrieval causes a slow system response, especially for a large and complex database, causes a slower system response. In this application, a node that matches a keyword is obtained through matching in the knowledge graph, and a prompt message is sent to the query user based on a plurality of pieces of metadata corresponding to the node. Because of the knowledge graph, a system response is fast, thereby improving user experience of the query user.

S740: The data analysis system 200 obtains the target data based on the target metadata. This step may be implemented by the table query unit 214 in the embodiment in FIG. 1.

During specific implementation, the data analysis system 200 may read, based on a storage address of table data that is recorded in the metadata, the target data from the storage address, and return the target data to the query user. It should be understood that one table may include a plurality of fields, and the query user may want to view only two or three fields, or want to view a field 1 in a table A and a field 2 in a table B. After a semantic mapping relationship is established between metadata of each field and a semantic node, when the query user performs data query, the query user only needs to enter a field included in a table that the query user wants to view, and the system may automatically generate, in a semantic node matching manner, the table required by the query user, thereby making the query method more flexible.

S750: The data analysis system 200 sends the target data to the client 100. This step may be implemented by the table query unit 214 in the embodiment in FIG. 1.

It should be understood that the data analysis field features a large data scale, a fast data change speed, and a wide data range. If data query is performed in a conventional retrieval manner, query efficiency is limited by a data scale. In this application, data query is implemented based on a knowledge graph. A semantic label is configured for a node in the knowledge graph, and a mapping relationship is further established between each node and metadata, so that data query can be changed to simple node matching. This can implement natural language query. In addition, this can improve query efficiency and improve user experience of the query user.

To better understand this application, the following describes S710 to S750 with reference to FIG. 8.

FIG. 8 shows an example interface of data query according to this application. The interface may include a question input area 810, a system reply area 820, and a historical question display area 830.

The question input area 810 is used by a query user to enter a query text. The query text is a natural language text.

The system reply area 820 is configured to display a query result of the query text to the query user.

The historical question display area 830 is configured to display a historical question to the query user.

In the example shown in FIG. 8, a query text entered by the query user for the first time is "I want to view the analysis result of the analysis model". With reference to the examples shown in FIG. 3 to FIG. 6, it can be learned that after an analysis model is configured, a generated analysis result is stored in the storage system 300 as new table data, and the data analysis system 200 may generate metadata of the analysis result, establish a physical mapping relationship between the physical metadata and the analysis result, then create a node corresponding to the metadata in the knowledge graph, and establish a semantic mapping relationship between the node and the metadata, where a label of the node may be "analysis result". In this way, after the query user enters the query text shown in FIG. 8, the data analysis system 200 may perform S710 to S750, to be specific, first extract a keyword "analysis result" in the query text, then match the keyword with a label of a node in the knowledge graph, to determine a target node corresponding to the keyword "analysis result" based on the analysis result, and then read target data based on metadata of the target node. The data analysis system 200 may generate, with reference to a dialog template, a returned dialog shown in FIG. 8: "OK, here is the link to the analysis result".

Further, a query text entered by the query user for the second time is "Please give me the net sales revenue statement". With reference to the knowledge graph shown in FIG. 3, it can be learned that the knowledge graph includes a "net sales revenue for last year" node and a "net sales revenue for this year" node. Therefore, after receiving the query text, the data analysis system 200 may perform S710 to S730 to determine that there are two nodes that match the query text, namely, the "net sales revenue for last year" node and the "net sales revenue for this year" node. In this case, the data analysis system may generate, with reference to a dialog template, a prompt dialog shown in FIG. 8: "OK, which year you want to view the net sales revenue". The query user may enter a supplementary text: "Last year". The data analysis system determines, with reference to the supplementary text entered by the analysis user, a target node "net sales revenue for last year" that matches the query text entered by the query user for the second time, obtains target data based on metadata corresponding to the target node, and returns, with reference to a dialog target, the dialog shown in FIG. 8: "OK, here is the link to the net sales revenue statement for last year".

It may be understood that, in this application, data query is implemented through the interface shown in FIG. 8, the query user may enter a natural language to obtain a query result, and the query user does not need to learn database knowledge and names of various tables. This reduces learning costs of the query user, improves query efficiency, and improves user experience of the query user.

In conclusion, according to the data analysis method provided in this application, a physical mapping relationship is established between metadata and table data of an underlying physical table; a semantic mapping relationship is established between a node and metadata, where semantics of a label of the node is related to the metadata; and a model mapping relationship is established between an analysis model and a node. In this way, by establishing a multi-layer mapping relationship, an analysis model can be decoupled from underlying table data, and variation of the underlying data does not affect the analysis model, thereby making the analysis model highly flexible and adaptable; and an analysis user does not need to adjust the analysis model, thereby improving user experience of the analysis user. In addition, because a node in a knowledge graph includes a semantic label, a query user may complete data query in a natural language, and the data analysis system may match a keyword in a query text entered by the query user with a semantic label of a node, to determine a first node corresponding to the keyword, so that a data query process changes from retrieval to matching. This improves query efficiency. In addition, the query user does not need to learn instructions related to database query, and can implement data query by entering a natural language. This reduces learning costs of the query user and improves user experience of the query user.

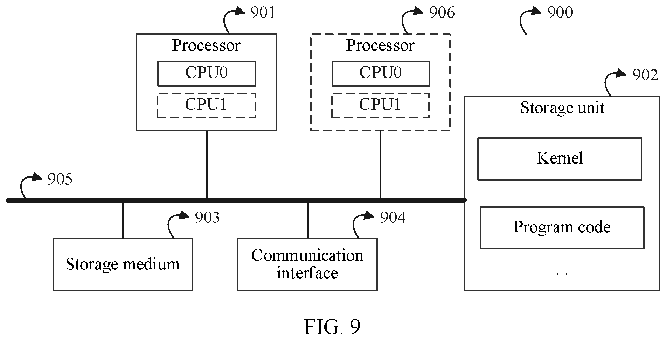

The foregoing describes in detail the data analysis system and the data analysis method provided in this application. The following describes a compute device provided in this application with reference to FIG. 9.

FIG. 9 is a diagram of a structure of a compute device according to this application. The compute device 900 may be the data analysis system in the foregoing content. Further, the compute device 900 includes a processor 901, a storage unit 902, a storage medium 903, and a communication interface 904. The processor 901, the storage unit 902, the storage medium 903, and the communication interface 904 communicate with each other through a bus 905, or communicate with each other by using another means, for example, through wireless transmission.

The processor 901 includes a plurality of general-purpose processors, for example, a CPU. The foregoing hardware chip is an application-specific integrated circuit (application-specific integrated circuit, ASIC), a programmable logic device (programmable logic device, PLD), or a combination thereof. The PLD is a complex programmable logic device (complex programmable logic device, CPLD), a field programmable gate array (field programmable gate array, FPGA), generic array logic (generic array logic, GAL), a data processing unit (data processing unit, DPU), a system on chip (system on chip, SoC), or any combination thereof. The processor 901 executes various types of digital storage instructions, for example, a software or firmware program stored in the storage unit 902, so that the compute device 900 can provide a plurality of services of a wide range.

During specific implementation, in an embodiment, the processor 901 includes one or more CPUs, for example, CPU0 and CPU1 shown in FIG. 9.

During specific implementation, in an embodiment, the compute device 900 may alternatively include a plurality of processors, for example, the processor 901 and a processor 906 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The storage unit 902 is configured to store program code, and the processor 901 controls execution of the program code, to perform the processing steps of data analysis in any one of the embodiments in FIG. 1 to FIG. 8. The program code includes one or more software units. The one or more software units are the metadata configuration unit, the node configuration unit, the model configuration unit, the generation unit, the mapping unit, the extraction unit, the graph query unit, and the table query unit in the embodiment in FIG. 1. The metadata configuration unit is configured to create metadata based on a metadata configuration request of a user, and establish a physical mapping relationship between the metadata and table data, and may be specifically configured to implement S210, S220, and optional steps thereof in the embodiment in FIG. 2. The mapping unit is configured to generate metadata based on table structure information of the table data, and establish a semantic mapping relationship between the metadata and the table data, and may be specifically configured to implement S250 and an optional step thereof in the embodiment in FIG. 2. The node configuration unit is configured to: create a node based on a node configuration request of the user, configure a label of the node, and establish a semantic mapping relationship between the node and the metadata, and may be specifically configured to implement S210, S230, and optional steps thereof in the embodiment in FIG. 2. The generation unit is configured to generate a label of a node based on semantics of metadata, metric data, and entity data, and establish a semantic mapping relationship between the node and the metadata, and may be specifically configured to implement S250 and an optional step thereof in the embodiment in FIG. 2. The model configuration unit is configured to create an analysis model based on a model configuration request of a user, and establish a model mapping relationship between the analysis model and the node, and may be specifically configured to implement S210, S220, and optional steps thereof in the embodiment in FIG. 2. The extraction unit is configured to receive a query request entered by a user, and extract a keyword in a query text in the query request, and is specifically configured to implement S710, S720, and optional step thereof in the embodiment in FIG. 7. The graph query unit is configured to match the keyword with a knowledge graph, and determine a target node and target metadata corresponding to the target node, and is specifically configured to implement S730 and an optional step thereof in the embodiment in FIG. 7. The table query unit is configured to obtain the target data based on the target metadata, and return the target data to the user, and is specifically configured to implement S740, S750, and optional steps thereof in the embodiment in FIG. 7.

The storage unit 902 includes a read-only memory and a random access memory, and provides instructions and data for the processor 901. The storage unit 902 further includes a non-volatile random access memory. The storage unit 902 is a volatile memory or a non-volatile memory, or includes both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM); or a hard disk (hard disk), a USB (universal serial bus, USB) flash drive, a flash (flash) memory, an SD card (secure digital memory Card, SD card), a memory stick, or the like. The hard disk is a hard disk drive (hard disk drive, HDD), a solid state drive (solid state drive, SSD), a mechanical hard disk (mechanical hard disk, HDD), or the like. This is not specifically limited in this application.

The storage medium 903 is a carrier for storing data, for example, a hard disk (hard disk), a USB (universal serial bus, USB) flash drive, a flash (flash) memory, an SD card (secure digital memory Card, SD card), a memory stick, or the like. The hard disk may be a hard disk drive (hard disk drive, HDD), a solid state drive (solid state drive, SSD), a mechanical hard disk (mechanical hard disk, HDD), or the like. This is not specifically limited in this application.

The communication interface 904 may be a wired interface (for example, an Ethernet interface), an internal interface (for example, a high-speed serial computer extended bus (Peripheral Component Interconnect express, PCIe) interface), a wired interface (for example, an Ethernet interface), or a wireless interface (for example, a cellular network interface or a wireless local area network interface), and is configured to communicate with another server or unit.

The bus 905 is a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX), or the like. The bus 905 is classified into an address bus, a data bus, a control bus, and the like.

In addition to the data bus, the bus 905 further includes a power bus, a control bus, a status signal bus, and the like. However, for clear description, various types of buses are marked as the bus 905 in the figure.

It should be noted that FIG. 9 is merely a possible implementation of an embodiment of this application. During actual application, the compute device 900 may alternatively include more or fewer components. This is not limited herein. For content that is not shown or not described in this embodiment of this application, refer to related descriptions in the embodiments in FIG. 1 to FIG. 6. Details are not described herein again.

An embodiment of this application further provides a compute device cluster. The compute device cluster may be the data analysis system in the foregoing content, and the compute device cluster includes at least one compute device 900. A storage unit 902 in the one or more compute devices 900 in the compute device cluster may store a same instruction or different instructions used to perform the data analysis method.

An embodiment of this application further provides a computer program product including instructions. The computer program product may be a software or program product that includes instructions and that can run on a compute device or be stored in any usable medium. When the computer program product runs on at least one compute device, the at least one compute device is enabled to perform the foregoing data analysis method.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive), or the like. The computer-readable storage medium includes instructions, and the instructions instruct a compute device to perform the foregoing data analysis method.

All or some of the foregoing embodiments may be implemented by using software, hardware, firmware, or any combination thereof. When software is used to implement embodiments, the foregoing embodiments may be implemented completely or partially in a form of a computer program product. The computer program product includes a plurality of computer instructions. When the computer program instructions are loaded or executed on a computer, all or some of the procedures or functions according to embodiments of the present invention are generated. The computer may be a general-purpose computer, a special-purpose computer, a computer network, or another programmable apparatus. The computer instructions may be stored in a computer-readable storage medium, or transmitted from one computer-readable storage medium to another computer-readable storage medium.

The foregoing descriptions are merely specific implementations of the present invention, but are not intended to limit the protection scope of the present invention. Various equivalent modifications or replacements may be readily figured out by a person skilled in the art within the technical scope disclosed in the present invention, and all these modifications or replacements shall fall within the protection scope of the present invention. Therefore, the protection scope of the present invention shall be subject to the protection scope of the claims.

## Claims

1. A data analysis system, wherein the system comprises a metadata layer, a semantic layer, and a model layer, wherein
the metadata layer is configured to store a physical mapping relationship between first metadata and first table data, wherein the first metadata is used to describe the first table data;
the semantic layer is configured to store a knowledge graph and a semantic mapping relationship between a first node in the knowledge graph and the first metadata, wherein the semantic mapping relationship indicates that semantics of the first label is related to the first metadata; and
the model layer is configured to store an analysis model and a model mapping relationship between the analysis model and the first node, wherein the analysis model is configured to obtain the first table data by using the model mapping relationship, the semantic mapping relationship, and the physical mapping relationship, and complete data analysis based on the first table data, to generate second table data.

2. The system according to claim 1, wherein the system comprises an extraction unit, the semantic layer comprises a graph query unit, and the metadata layer comprises a table query unit, wherein
the extraction unit is configured to obtain a query text sent by a first user, wherein the query text is a natural language text;
the graph query unit is configured to: obtain a keyword in the query text, match the keyword with labels of a plurality of nodes in the knowledge graph, to determine the first node corresponding to the keyword, and determine, based on the semantic mapping relationship, the first metadata to which the first node is mapped; and
the table query unit is configured to determine, based on the physical mapping relationship, the first table data corresponding to the first metadata, and send the first table data to the first user.

3. The system according to claim 2, wherein the metadata layer comprises a mapping unit, and the mapping unit is configured to generate second metadata based on a storage address and table structure information of the second table data, and establish a physical mapping relationship between the second metadata and the second table data.

4. The system according to claim 3, wherein the semantic layer comprises a node configuration unit, and the node configuration unit is configured to: obtain a node configuration request sent by a second user, create a second node based on the node configuration request, and establish a semantic mapping relationship between the second node and the second metadata, wherein the node configuration request comprises a label of the second node and the semantic mapping relationship between the second node and the second metadata.

5. The system according to claim 3, wherein the semantic layer comprises a generation unit, and the generation unit is configured to: create a second node in the knowledge graph, determine semantic information of the second metadata based on a semantic recognition model, generate a label of the second node based on the semantic information, and establish a semantic mapping relationship between the second node and the second metadata.

6. The system according to any one of claims 1 to 5, wherein the model layer comprises a model configuration unit, wherein
the model configuration unit is configured to obtain a model configuration request sent by the second user, wherein the model configuration request comprises model data of an analysis model that the second user requests to set, and a model mapping relationship between the analysis model and the first node, and the model configuration request is generated by the second user based on a label of a node in the knowledge graph; and
the model configuration unit is configured to create the analysis model, and establish the model mapping relationship between the analysis model and the first node.

7. The system according to any one of claims 1 to 6, wherein that the semantics of the first label is related to the first metadata comprises:
semantics of a label of the first node is the same as table structure information in the first metadata, and the table structure information comprises one or more of the following: a field, a table name, and a database name.

8. The system according to any one of claims 1 to 7, wherein that the semantics of the first label is related to the first metadata comprises:
the semantics of the label of the first node is a name of a metric or a dimension, and the first table data corresponding to the first metadata participates in calculation of the metric or the dimension.

9. The system according to any one of claims 1 to 8, wherein that the semantics of the first label is related to the first metadata comprises:
the semantics of the label of the first node is a name of an entity, the entity is an object existing in a physical world, the first metadata has an entity association relationship with the entity, and the association relationship comprises one or more of a dependency relationship, a cooperation relationship, a subordinate relationship, a purchase relationship, a location relationship, and an upstream/downstream relationship.

10. A data analysis method, wherein the method is applied to a data analysis system, and the data analysis system comprises a metadata layer and a semantic layer, wherein the metadata layer is configured to store a physical mapping relationship between first metadata and first table data, wherein the first metadata is used to describe the first table data; and the semantic layer is configured to store a knowledge graph and a semantic mapping relationship between a first node in the knowledge graph and the first metadata, wherein the semantic mapping relationship indicates that semantics of the first label is related to the first metadata; and
the method comprises:
obtaining a query text sent by a first user, and determining a keyword in the query text, wherein the query text is a natural language text;
matching the keyword with labels of a plurality of nodes in the knowledge graph based on the knowledge graph in the semantic layer, to determine the first node corresponding to the keyword, and determining, based on the semantic mapping relationship, the first metadata to which the first node is mapped; and
determining, based on the physical mapping relationship in the metadata layer, the first table data to which the first metadata is mapped, and sending the first table data to the first user.

11. The method according to claim 1, wherein the data analysis system further comprises a model layer, and the model layer is configured to store an analysis model and a model mapping relationship between the analysis model and the first node, wherein the analysis model is configured to obtain the first table data by using the model mapping relationship, the semantic mapping relationship, and the physical mapping relationship, and complete data analysis based on the first table data; and
the method further comprises:
receiving a data analysis request sent by a second user, wherein the data analysis request comprises information about the analysis model;
obtaining the analysis model;
determining, based on the model mapping relationship in the model layer, the first node to which the analysis model is mapped;
determining, based on the semantic mapping relationship in the semantic layer, the first metadata to which the first node is mapped;
determining, based on the physical mapping relationship in the metadata layer, the first table data to which the first metadata is mapped; and
inputting the first table data into the analysis model to obtain second table data, and storing the second table data.

12. The method according to claim 11, wherein after storing the second table data, the method further comprises:
generating second metadata based on a storage address and table structure information of the second table data, and establishing a physical mapping relationship between the second metadata and the second table data in the metadata layer.

13. The method according to claim 12, wherein the method further comprises:
creating a second node in the knowledge graph in the semantic layer, determining semantic information of the second metadata based on a semantic recognition model, generating a label of the second node based on the semantic information, and establishing a semantic mapping relationship between the second node and the second metadata in the semantic layer.

14. The method according to claim 12, wherein the method further comprises:
obtaining a node configuration request sent by the second user, creating a second node in the knowledge graph in the semantic layer based on the node configuration request, and establishing a semantic mapping relationship between the second node and the second metadata in the semantic layer, wherein the node configuration request comprises a label of the second node and the semantic mapping relationship between the second node and the second metadata.

15. The method according to any one of claims 11 to 14, wherein before receiving the data analysis request sent by the second user, the method further comprises:
obtaining a model configuration request sent by the second user, wherein the model configuration request comprises model data of an analysis model that the second user requests to set, and a model mapping relationship between the analysis model and the first node, and the model configuration request is generated by the second user based on a label of a node in the knowledge graph; and
creating the analysis model, and establishing the model mapping relationship between the analysis model and the first node.

16. The method according to any one of claims 10 to 15, wherein that semantics of a label of the first node is related to the first metadata comprises:
the semantics of the label of the first node is the same as table structure information in the first metadata, and the table structure information comprises one or more of the following: a field, a table name, and a database name.

17. The method according to any one of claims 10 to 16, wherein that the semantics of the label of the first node is related to the first metadata comprises:
the semantics of the label of the first node is a name of a metric or a dimension, and the first table data corresponding to the first metadata participates in calculation of the metric or the dimension.

18. The method according to any one of claims 10 to 17, wherein that the semantics of the label of the first node is related to the first metadata comprises:
the semantics of the label of the first node is a name of an entity, the entity is an object existing in a physical world, the first metadata has an entity association relationship with the entity, and the association relationship comprises one or more of a dependency relationship, a cooperation relationship, a subordinate relationship, a purchase relationship, a location relationship, and an upstream/downstream relationship.

19. A compute device, wherein the compute device comprises a processor and a storage, the storage is configured to store instructions, and the processor is configured to execute the instructions, so that the compute device implements the method according to any one of claims 1 to 9.

20. A computer-readable storage medium, wherein the computer-readable storage medium stores instructions, and when the instructions are run by a compute device or a compute device cluster, the method according to any one of claims 1 to 9 is implemented.
